(19) **Europäisches Patentamt**
**European Patent Office**
**Office européen des brevets**

(11) **EP 3 875 901 B1**

(12) **EUROPEAN PATENT SPECIFICATION**

(45) Date of publication and mention
of the grant of the patent:
**10.01.2024 Bulletin 2024/02**

(51) International Patent Classification (IPC):
*G01C 11/00* (2006.01)     *G01C 11/02* (2006.01)
*G06T 3/40* (2006.01)     *G03B 15/00* (2021.01)

(21) Application number: **18940764.6**

(22) Date of filing: **21.11.2018**

(52) Cooperative Patent Classification (CPC):
**G01C 11/02; G03B 15/006; G06T 3/4038**

(86) International application number:
**PCT/CN2018/116652**

(87) International publication number:
**WO 2020/103019 (28.05.2020 Gazette 2020/22)**

(54) **PLANNING METHOD AND APPARATUS FOR SURVEYING AND MAPPING SAMPLING POINTS**

PLANUNGSVERFAHREN UND VORRICHTUNG ZUR VERMESSUNG UND ABBILDUNG VON ABTASTPUNKTEN

PROCÉDÉ ET APPAREIL DE PLANIFICATION D'ARPENTAGE ET DE CARTOGRAPHIE DE POINTS D'ÉCHANTILLONNAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.09.2021 Bulletin 2021/36**

(73) Proprietor: **Guangzhou Xaircraft Technology Co., Ltd**
**Tianhe District**
**Guangzhou,**
**Guangdong 510000 (CN)**

(72) Inventors:
• **LIU, Peng**
**Guangzhou, Guangdong 510000 (CN)**
• **JIN, Xiaohui**
**Guangzhou, Guangdong 510000 (CN)**

(74) Representative: **Murgitroyd & Company**
**Murgitroyd House**
**165-169 Scotland Street**
**Glasgow G5 8PL (GB)**

(56) References cited:
**WO-A1-2018/176376     US-A1- 2012 320 203**
**US-A1- 2015 373 267     US-A1- 2017 221 241**

## Description

TECHNICAL FIELD

Embodiments of the present disclosure relate to the field of surveying and mapping technologies, for example, to a method and a device for planning sample points for surveying and mapping, a control terminal and a storage medium.

BACKGROUND

In recent years, an Unmanned Aerial Vehicle (UAV) has been widely used in the fields of surveying and mapping, emergency response, disaster relief, etc. due to its characteristics such as high efficiency, flexibility and low cost. A UAV aerial surveying and mapping (aerial surveying for short) technology can greatly reduce work cycle and investment of manpower and financial resources in a traditional aerial surveying and mapping technology and thus has more realistic significance in the fields of surveying and mapping technologies, etc.

In a UAV aerial surveying and mapping technology, a status of an aerial photography area is observed by a carried video capture device using a remote image transmission technology, and captured photos are stitched by using an aerial photography image mosaic technology, so as to get an overall image of the aerial photography area. In a traditional UAV aerial surveying and mapping method, a traversal method along parallel lines is usually adopted to conduct mobile surveying and mapping in an area to be surveyed and mapped when photos are being taken, and a certain degree of overlap between every two consecutive photos is usually required for ensuring a successful stitching. In order to ensure a subsequent normal stitching, a photo is required to have a certain degree of overlap with other photos in both horizontal and vertical directions. Generally speaking, in order to ensure the subsequent normal stitching, the degree of overlap is generally required to be greater than 50%.

US2017/221241A1 discloses a system for generating building maps, including an unmanned aerial vehicle carrying at least one imaging device, and a computing device connected to the unmanned aerial vehicle. In particular, the computing device can be configured to select target image areas having boundaries that overlap by a preconfigured amount, to aid in image capture and composite generation. Computing device can then be configured to generate flight path data by generating a plurality of flight path segments that connect the target image areas (e.g., the center of each target image area) in sequence.

In a process of implementing the present disclosure, the inventor found that the related technology has the following defects: the traditional UAV aerial surveying and mapping methods are all for surveying and mapping an aerial photography area of a large area plot, and it is required to take multiple photos with high degree of overlap in a surveying and mapping process. It is time-consuming and inefficient to stitch the above photos taken by the UAV. In addition, if the photos obtained by the UAV are uploaded to a server for stitching, a process of data uploading and processing takes longer. At the same time, when the traditional UAV aerial surveying and mapping method is applied to small area plot surveying and mapping, not only the operation is complicated and the processing time is long, but also the hardware cost is high.

SUMMARY

Embodiments of the present disclosure provide a method and a device for planning sample points for surveying and mapping, a control terminal and a storage medium, so as to reduce the surveying and mapping cost and improve the surveying and mapping efficiency.

The invention is set out as in the appended set of claims.

BRIEF DESCRIPTION OF DRAWINGS

FIG. 1a is a flowchart of a method for planning sample points for surveying and mapping according to a first embodiment of the present disclosure.

FIG. 1b is a schematic diagram of a position distribution of each photographing point in a combined photographing point set according to the first embodiment of the present disclosure.

FIG. 2 is a flowchart of a method for planning sample points for surveying and mapping according to a second embodiment of the present disclosure.

FIG. 3a is a flowchart of a method for planning sample points for surveying and mapping according to a third embodiment of the present disclosure.

FIG. 3b is a flowchart of a method for planning sample points for surveying and mapping according to the third embodiment of the present disclosure.

FIG. 3c is a flowchart of a method for planning sample points for surveying and mapping according to the third embodiment of the present disclosure.

FIG. 3d is a schematic diagram of adding a first target duplicate subset to a combined photographing point set according to the third embodiment of the present disclosure.

FIG. 3e is a schematic diagram of adding a second target duplicate subset to a combined photographing point set according to the third embodiment of the present disclosure.

FIG. 3f is a schematic diagram of adding multiple supplementary outer layer peripheral photographing points to a combined photographing point set according to the third embodiment of the present disclosure.

FIG. 4 is a schematic diagram of a device for planning sample points for surveying and mapping according to a fourth embodiment of the present disclosure.

FIG. 5 is a schematic structural diagram of a control terminal for controlling an unmanned aerial vehicle according to a fifth embodiment of the present disclosure.

## DETAILED DESCRIPTION OF THE EMBODIMENTS

The present disclosure may be described in further detail below with reference to the accompanying drawings and embodiments. It can be appreciated that the embodiments described herein are merely intended to illustrate the present disclosure, and are not intended to limit the present disclosure.

Only some, but not all, of the contents related to the present disclosure are shown in the drawings for ease of description. It should be noted, prior to a more detailed discussion of exemplary embodiments, that some exemplary embodiments are described as processes or methods which are depicted as flowcharts. Although the flowcharts may describe the operations (or steps) as a sequential processing, many of the operations may be carried out in parallel, concurrently or simultaneously. In addition, the order of the operations may be rearranged. The processing may be terminated when its operations are completed, but could have additional steps not included in the drawings. The processing may correspond to a method, a function, a procedure, a subroutine, a subprogram, etc.

First Embodiment

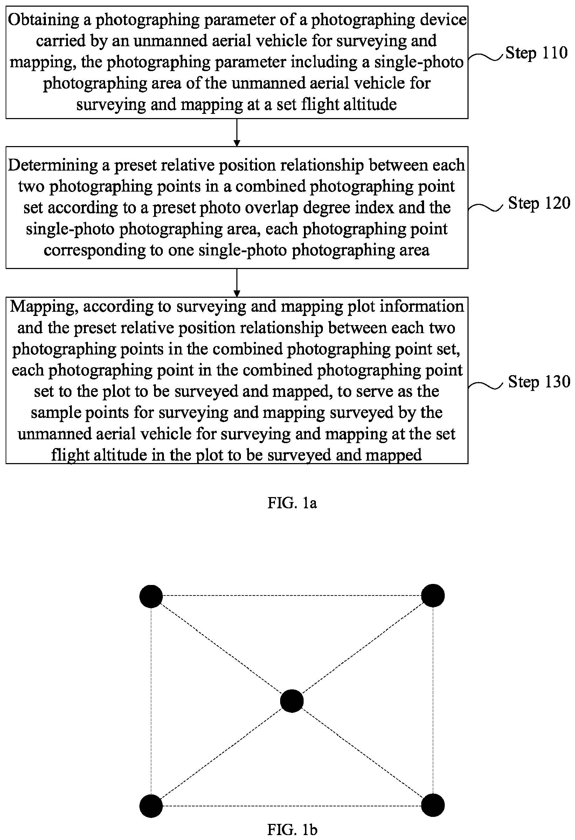

FIG. 1a is a flowchart of a method for planning sample points for surveying and mapping according to a first embodiment of the present disclosure. The embodiment is applicable to a case of efficiently obtaining each of sample points for surveying and mapping in a plot to be surveyed and mapped. The method may be executed by a device for planning sample points for surveying and mapping, and the device may be implemented by means of software and/or hardware, and may generally be integrated in control equipment and used in cooperation with an unmanned aerial vehicle for surveying and mapping that is responsible for aerial photography. Correspondingly, as shown in FIG. 1a, the method includes the following operations.

Step 110: obtaining a photographing parameter of a photographing device carried by an unmanned aerial vehicle for surveying and mapping, the photographing parameter including a single-photo photographing area of the unmanned aerial vehicle for surveying and mapping at a set flight altitude.

The single-photo photographing area is an actual part of an area to be surveyed and mapped in a plot to be surveyed and mapped that can be captured by a single photo. The area to be surveyed and mapped is an area with a definite range of latitude and longitude, which may have any shape and any size, and the embodiments of the present disclosure are not limited to the shape and size of the area to be surveyed and mapped.

In the embodiment of the present disclosure, before planning each sample point for surveying and mapping of the plot to be surveyed and mapped by using a control terminal of an unmanned aerial vehicle, the photographing parameter of the photographing device carried by the unmanned aerial vehicle for surveying and mapping is obtained firstly, i.e., the single-photo photographing area of the unmanned aerial vehicle for surveying and mapping at the set flight altitude is obtained. It should be appreciated that a size of areas to be surveyed and mapped that can be covered by the single-photo photographing area of the unmanned aerial vehicle for surveying and mapping at different flight altitude are also different.

In an optional embodiment of the present disclosure, before obtaining a photographing parameter of a photographing device carried by an unmanned aerial vehicle for surveying and mapping, the method further includes: calculating the set flight altitude according to a pixel width of the photographing device, a lens focal length of the photographing device, and a ground pixel resolution.

It can be appreciated that when the photographing device such as a camera of the unmanned aerial vehicle has fixed photographing parameters, the set flight altitude of the unmanned aerial vehicle directly influences the ground pixel resolution. The ground pixel resolution directly determines an area of the area to be surveyed and mapped covered by a single-photo. Therefore, before obtaining the photographing parameter of the photographing device carried by the unmanned aerial vehicle, the set flight altitude of the unmanned aerial vehicle may be determined at first. The set flight altitude of the unmanned aerial vehicle may be calculated according to the pixel width of the photographing device, the lens focal length of the photographing device, and the ground pixel resolution. Optionally, a formula where the set flight altitude = the ground pixel resolution * the lens focal length / the pixel width may be obtained from a formula where the ground pixel resolution = the set flight altitude * the pixel width / the lens focal length. And the pixel width is equal to a width of a dimension / a frame width of a sensor of the photographing device.

In an optional embodiment of the present disclosure, the obtaining a photographing parameter of a photographing device carried by an unmanned aerial vehicle for surveying and mapping may include: calculating the single-photo photographing area of the unmanned aerial vehicle for surveying and mapping at the set flight altitude according to a pixel width of the photographing device, a frame size of the photographing device, and a ground pixel resolution.

In the embodiment of the present disclosure, the single-photo photographing area of the unmanned aerial vehicle for surveying and mapping at the set flight altitude may be further calculated according to the pixel width of the photographing device, the frame size of the photographing device, and the ground pixel resolution. The single-photo photographing area is equal to the ground pixel resolution multiplied by the frame size, and the ground pixel resolution is equal to the set flight altitude multiplied by the pixel width / the lens focal length.

Namely, a single-photo photographing length is equal to the ground pixel resolution multiplied by a frame length, and a single-photo photographing width is equal to the ground pixel resolution multiplied by a frame width. For example, when the frame size is 3456 * 4608 and the ground pixel resolution is 0.05 m, the single-photo photographing area is 172.8 m * 230.4 m.

Step 120: determining a preset relative position relationship between each two photographing points in a combined photographing point set according to a preset photo overlap degree index and the single-photo photographing area, each photographing point corresponding to one single-photo photographing area.

The preset photo overlap degree index may be a percentage of overlap between two photos which are set according to actual needs, such as 50%, 60%, 70%, or the like. The embodiments of the present disclosure are not limited to a value of the photo overlap degree index. The combined photographing point set is a set of preset photographing points according to a preset distribution rule, and the set includes a plurality of photographing points, and there are a relative position and relative distance relationship between every two photographing points. The combined photographing point set includes five photographing points, which are located at a center and four vertices of a rectangle, respectively. For another example, the four vertices are located respectively in four directions of east, south, west and north. A relative distance between each vertex is 20 m, and a relative distance between each vertex and a central point is $10\sqrt{2}$ m.

According to the invention, after the single-photo photographing area of the unmanned aerial vehicle for surveying and mapping at the set flight altitude is determined, the preset relative position relationship between each two photographing points in the combined photographing point set may be determined according to the preset photo overlap degree index and a size of the single photo photographing area. Each photographing point in the combined photographing point set corresponds to one single-photo photographing area. For example, the photographing point is a midpoint or one of vertices of the single-photo photographing area.

FIG. 1b is a schematic diagram of a position distribution of each photographing point in a combined photographing point set according to the invention According to the invention, as shown in FIG. 1b, initial photographing points in the combined photographing point set include a central photographing point and four peripheral photographing points, and the four peripheral photographing points are four vertices of a rectangle centered on the central photographing point. A composite photo obtained by photographing based on all photographing points in the combined photographing point set is of a rectangle.

According to the invention, as shown in FIG. 1b, the combined photographing point set includes five initial photographing points, which are the central photographing point and the four peripheral photographing points, respectively. The central photographing point is a center of a rectangle, and correspondingly, the four peripheral photographing points are four vertices of the rectangle corresponding to the central photographing point. There is a certain position relationship between each two photographing points, and the setting of the position relationship meets a certain condition, i.e., a complete rectangle photo is obtained when photos taken at all photographing points are combined. A combining process is to cover each two photos according to overlapping images between each other. In other embodiments, after default mapping is completed, each auxiliary photographing point may be rotated around a reference photographing location point according to an operation of a user, or moved according to an operation of the user such as a sliding operation.

In the related arts, when points for surveying and mapping corresponding to the plot to be surveyed and mapped are formed, since a traversal method along parallel lines is adopted to survey and map movably in the plot to be surveyed and mapped, it should be ensured that there is a preset overlapping degree between other photographing points located in horizontally adjacent positions and vertically adjacent positions of a photo taken at one point for surveying. As a result, one surveying and mapping photo contains a small amount of information that is different from other surveying and mapping photos. Therefore, the demand for photos is greater, and a large amount of work and time required for synthesis and stitching of the photos in the later stage are relatively large. In the invention, five photographing points selected in the combined photographing point set are a central photographing point and four peripheral photographing points, and as long as each peripheral photographing point and the central photographing point meet the requirement for the above required overlap degree (for example, 60% or 70% or the like), there is no need to meet such a high requirement for the overlap degree between each two peripheral photographing points, so that the total number of surveying and mapping photos taken by surveying and mapping the plot to be surveyed and mapped with a fixed size is greatly reduced, and further the time and hardware cost required for synthesis and stitching of the photos in the later stage can also be greatly reduced. In particular, if a solution of the embodiment of the present disclosure is applied to a small plot, for example, one plot may be completely covered after a plurality of photos taken at each photographing point in the combined photographing point set are combined or stitched, the solution of the embodiment of the present disclosure may be significantly superior to a traversal method along parallel lines for selecting points in the related arts in terms of the number of points for surveying and mapping and the difficulty of stitching photos in the later stage.

Step 130: mapping, according to information of the plot to be surveyed and mapped and the preset relative position relationship between each two photographing points in the combined photographing point set, each photographing point in the combined photographing point set to the plot to be surveyed and mapped, to serve as a sample point for surveying and mapping on which the unmanned aerial vehicle for surveying and mapping performs surveying and mapping at the set flight altitude in the plot to be surveyed and mapped.

The information of the plot to be surveyed and mapped may be related information of the plot be surveyed and mapped, such as an area shape or an area size of the plot to be surveyed and mapped, a reference photographing position point designated in the plot to be surveyed and mapped, etc.

In the embodiment of the present disclosure, each photographing point in the combined photographing point set may be mapped to the plot to be surveyed and mapped according to the information of the plot to be surveyed and mapped and the preset relative position relationship between each two photographing points in the combined photographing point set. Optionally, a point in the plot to be surveyed and mapped may be selected as a reference photographing position point, and a mapping relationship between one photographing point in the combined photographing point set and the determined reference photographing position point may be established. Then, multiple auxiliary photographing position points corresponding to the reference photographing position point are determined according to the preset relative position relationship between each two photographing points in the combined photographing point set, so as to realize the mapping between each photographing point and each photographing position point in the plot to be surveyed and mapped, thereby mapping each photographing point in the combined photographing point set to the plot to be surveyed and mapped. Each corresponding photographing position point in the plot to be surveyed and mapped with each photographing point in the combined photographing point set may be served as the sample points for surveying and mapping on which the unmanned aerial vehicle for surveying and mapping perform surveying and mapping at the set flight altitude in the plot to be surveyed and mapped. The unmanned aerial vehicle for surveying and mapping may perform aerial photography based on each sample point for surveying and mapping, and send photos obtained by the aerial photography to a corresponding control terminal or ground terminal, so that the control terminal can synthesize the obtained photos to obtain a final surveying and mapping image. Optionally, in the solution of the embodiment of the present disclosure, since the number of surveying and mapping photos may be greatly reduced, the unmanned aerial vehicle for surveying and mapping may implement the synthesis of multiple photos locally.

As for the photo obtained corresponding to each sample point for surveying and mapping obtained by the method for planning the sample points for surveying and mapping according to the embodiments of the present disclosure, it not required that each two successive photos have a certain degree of overlap therebetween, and therefore, the time-consuming processing of image data can be greatly reduced.

In the embodiments of the present disclosure, by obtaining the single-photo photographing area of the unmanned aerial vehicle for surveying and mapping at the set flight altitude; determining the preset relative position relationship between each two photographing points in the combined photographing point set according to the preset photo overlap degree index and the single-photo photographing area; and mapping, according to information of the plot to be surveyed and mapped and the preset relative position relationship between each two photographing points in the combined photographing point set, each photographing point in the combined photographing point set to the plot to be surveyed and mapped, to serve as the sample points for surveying and mapping on which the unmanned aerial vehicle for surveying and mapping perform surveying and mapping at the set flight altitude in the plot to be surveyed and mapped, a new method for planning the sample points for surveying and mapping is proposed, and the prior planning manner of moving alone parallel lines is replaced with an overall planning manner based on a plurality of points for surveying and mapping in the combined photographing point set, so that problems of high cost and low surveying and mapping efficiency existing in the prior UAV aerial surveying and mapping methods are solved, the surveying and mapping cost is reduced, and the surveying and mapping efficiency is improved.

Second Embodiment

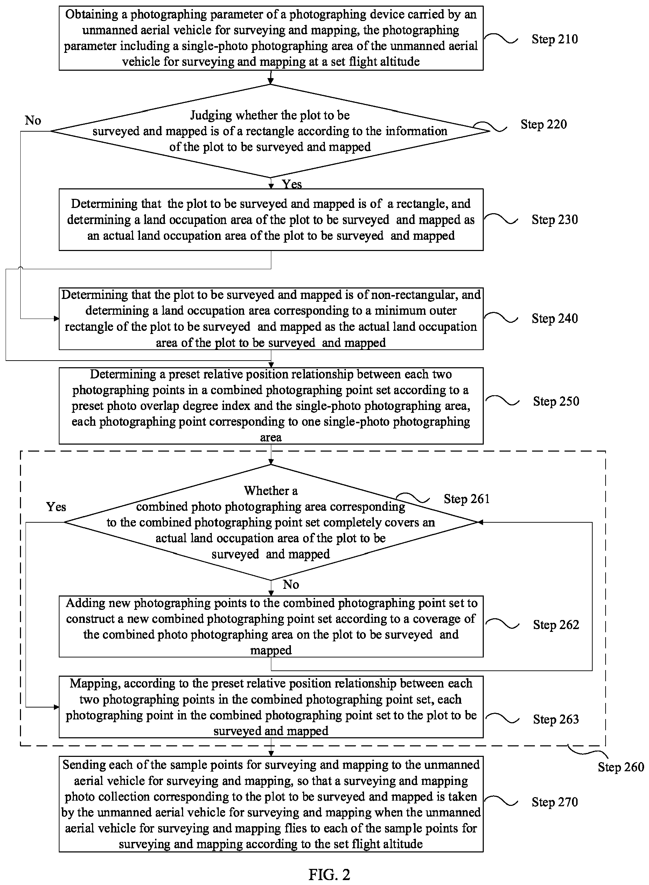

FIG. 2 is a flowchart of a method for planning sample points for surveying and mapping according to a second embodiment of the present disclosure. This embodiment is described in detail on the basis of the above-mentioned embodiments. In the embodiment, an implementation manner is given as follows: determining a preset relative position relationship between each two photographing points in a combined photographing point set according to a preset photo overlap degree index and the single-photo photographing area, and mapping, according to information of the plot to be surveyed and mapped and the preset relative position relationship between each two photographing points in the combined photographing point set, each photographing point in the combined photographing point set to the plot to be surveyed and mapped. Correspondingly, as shown in FIG.

2, the method of the embodiment may include the following contents.

Step 210: obtaining a photographing parameter of a photographing device carried by an unmanned aerial vehicle for surveying and mapping, the photographing parameter including a single-photo photographing area of the unmanned aerial vehicle for surveying and mapping at a set flight altitude, wherein the single-photo photographing area is equal to a ground pixel resolution multiplied by a frame size.

Step 220: judging whether the plot to be surveyed and mapped is of a rectangle according to the information of the plot to be surveyed and mapped, if the plot to be surveyed and mapped is of a rectangle, then executing step 230; otherwise, executing step 240.

Step 230: determining the plot to be surveyed and mapped is of a rectangle, and determining a land occupation area of the plot to be surveyed and mapped as an actual land occupation area of the plot to be surveyed and mapped.

The actual land occupation area may be a land occupation area corresponding to a shape of the plot to be surveyed and mapped itself, or a land occupation area corresponding to a shape obtained by expanding the plot to be surveyed and mapped, and the embodiments of the present disclosure are not limited thereto.

In the embodiment of the present disclosure, before the sample points for surveying and mapping are planned for the plot to be surveyed and mapped, a preprocessing operation is performed firstly on the actual land occupation area of the plot to be surveyed and mapped according to the information of the plot to be surveyed and mapped. Optionally, if the control terminal determines that the plot to be surveyed and mapped is of a rectangle according to the information of the plot to be surveyed and mapped obtained by the unmanned aerial vehicle for surveying and mapping, there is no need to perform the preprocessing operation on the plot to be surveyed and mapped, and the land occupation area to be surveyed may be directly determined as the actual land occupation area.

Step 240: determining that the plot to be surveyed and mapped is of non-rectangular according to the information of the plot to be surveyed and mapped, then determining a land occupation area corresponding to a minimum outer rectangle of the plot to be surveyed and mapped as the actual land occupation area of the plot to be surveyed and mapped.

Correspondingly, if the control terminal determines that the plot to be surveyed and mapped is of non-rectangular according to the information of the plot to be surveyed and mapped, the land occupation area corresponding to the minimum outer rectangle of the plot to be surveyed and mapped is determined as the actual land occupation area of the plot to be surveyed and mapped. Since the single-photo photographing area is usually of a rectangle, processing the actual land occupation area of the plot to be surveyed and mapped as a rectangular shape is convenient for the surveying and mapping UAV to obtain complete image information of the plot to be surveyed and mapped by taking multiple photos.

Step 250: determining a preset relative position relationship between each two photographing points in a combined photographing point set according to a preset photo overlap degree index and the single-photo photographing area, each photographing point corresponding to one single-photo photographing area.

In an optional embodiment of the present disclosure, the determining a preset relative position relationship between each two photographing points in a combined photographing point set according to a preset photo overlap degree index and the single-photo photographing area may include:

determining a size of a single photo according to a frame size of the photographing device and a pixel width of the photographing device;
constructing a two-dimensional coordinate system, and selecting a target point in the two-dimensional coordinate system as the central photographing point;
generating a central photo in the two-dimensional coordinate system according to the central photographing point and the size of the single photo;
generating four peripheral photos that meet the preset photo overlap degree index with the central photo at an upper left corner, a lower left corner, an upper right corner, and a lower right corner of the central photo, respectively;
determining, in the two-dimensional coordinate system, a coordinate value of a peripheral photographing point corresponding to each peripheral photo according to a mapping relationship between the size of the single photo and the single-photo photographing area; and
determining the preset relative position relation between each two photographing points in the combined photographing point set according to coordinate values of the central photographing point and each peripheral photographing point in the two-dimensional coordinate system.

The target point may be any point in the two-dimensional coordinate system, for example, the target point may be an original point in the two-dimensional coordinate system.

Optionally, when the preset relative position relationship between each two photographing points in the combined photographing point set is determined, the size of the single photo may be determined firstly according to the frame size of the photographing device and the pixel width of the photographing device. The size of the single photo is equal to the frame size multiplied by the pixel width (namely, a length of the single-photo is equal to a frame length multiplied by the pixel width; a width of the single-photo is equal to a frame width multiplied by the pixel width). Then, the target point in the two-dimensional coordinate system is selected as the central photographing point in the combined photographing point set. Further, the central photo is generated in the two-dimensional coordinate system according to the central photographing point and the size of the single photo. For example, the central photographing point is determined as a center of the central photo, and the central photo is generated according to the size of the single photo. Then, four peripheral photos matching with the central photo are generated in four directions including the upper left corner, the lower left corner, the upper right corner and the lower right corner of the central photo according to the size of the single photo and the photo overlap degree index, respectively. The central photo and the four peripheral photos matching therewith are not photos taken in real sense, but are a rectangle area with the same size and shape as the single-photo. Correspondingly, after the central photo and the four peripheral photos matching therewith are obtained, the coordinate value of the peripheral photographing point corresponding to each peripheral photo in the two-dimensional coordinate system may be determined according to the mapping relationship between the size of the single photo and the single-photo photographing area. For example, if the size of the single photo is 10 cm* 10 cm, the preset photo overlap degree index is 50 %, the peripheral photos corresponding to the upper left corner, the lower left corner, the upper right corner and the lower right corner respectively correspond to the single-photo photographing area at the upper left corner, the lower left corner, the upper right corner and the lower right corner, and the mapping relation between the size of the single photo and the single-photo photographing area is 1:200, and thus the single-photo photographing area is correspondingly 20 m*20 m. If a central point of the peripheral photo is determined as the peripheral photographing point, and the original point of the coordinate is adopted as the central photographing point, coordinate value of each peripheral photographing point may be (-10, 10), (-10, -10), (10, 10), and (10, -10), respectively, in unit of m. Correspondingly, after the coordinate value of each peripheral photographing point is obtained, the preset relative position relationship between each two photographing points in the combined photographing point set may be determined according to the coordinate values of the central photographing point and each peripheral photographing point in the two-dimensional coordinate system. For example, in the above examples, there is a relative distance of 20 m between the peripheral photographing points located at each vertex in the combined photographing point set, and there is a relative distance of $10\sqrt{2}$ m between the central photographing point at the central point and the peripheral photographing point.

Step 260: mapping, according to information of the plot to be surveyed and mapped and the preset relative position relationship between each two photographing points in the combined photographing point set, each photographing point in the combined photographing point set to the plot to be surveyed and mapped, to serve as the sample points for surveying and mapping surveyed by the unmanned aerial vehicle for surveying and mapping at the set flight altitude in the plot to be surveyed and mapped.

Correspondingly, the step 260 may include the following operations.

Step 261: judging whether a combined photo photographing area corresponding to the combined photographing point set completely covers an actual land occupation area of the plot to be surveyed and mapped, if the combined photo photographing area completely covers the actual land occupation area of the plot to be surveyed and mapped, then executing step 263; otherwise, executing step 262.

Step 262: adding new photographing points to the combined photographing point set to construct a new combined photographing point set according to a coverage of the combined photo photographing area on the plot to be surveyed and mapped, and returning to execute the step 261.

Correspondingly, if the combined photo photographing area corresponding to the combined photographing point set fails to completely cover the actual land occupation area of the plot to be surveyed and mapped, it indicates that a combined photo photographing area corresponding to a single combined photographing point set fails to directly obtain the complete image information of the plot to be surveyed and mapped. Then, according to the coverage of the combined photo photographing area on the plot to be surveyed and mapped, the new photographing points are added to the combined photographing point set to construct the new combined photographing point set, so as to use the new combined photographing point set to determine each sample point for surveying and mapping of the plot to be surveyed and mapped.

Correspondingly, in an embodiment the present disclosure, after the new combined photographing point set is formed, the control terminal continues to determine whether the new combined photographing point set can completely cover the actual land occupation area of the plot to be surveyed and mapped. If the new combined photographing point set still fails to completely cover the actual land occupation area of the plot to be surveyed and mapped, the operation of determining the preset relative position relationship between each two photographing points in the combined photographing point set according to the preset photo overlap degree index and the single-photo photographing area is returned to execute, until it is determined that the combined photo photographing area corresponding to the combined photographing point set can completely cover the actual land occupation area of the plot to be surveyed and mapped.

In an embodiment of the present disclosure, the determining that a combined photo photographing area corresponding to the combined photographing point set fails to completely cover an actual land occupation area of the plot to be surveyed and mapped may include: if an actual land occupation length of the actual land occupation area is greater than a combined photographing length of the combined photo photographing area, or an actual land occupation width of the actual land occupation area is greater than a combined photographing width of the combined photo photographing area, determining that the combined photo photographing area fails to completely cover the actual land occupation area of the plot to be surveyed and mapped.

In the embodiment of the present disclosure, the control terminal may judge whether the combined photo photographing area completely cover the actual land occupation area of the plot to be surveyed and mapped according to the obtained length information of each side in the actual land occupation area and each side in the combined photo photographing area. Optionally, if the actual land occupation length of the actual land occupation area is greater than the combined photographing length of the combined photo photographing area, or the actual land occupation width of the actual land occupation area is greater than the combined photographing width of the combined photo photographing area, it is determined that the combined photo photographing area fails to completely cover the actual land occupation area of the plot to be surveyed and mapped.

Step 263: mapping, according to the preset relative position relationship between each two photographing points in the combined photographing point set, each photographing point in the combined photographing point set to the plot to be surveyed and mapped.

The combined photo photographing area may be an area obtained after synthesizing photos taken at each photographing point in the combined photographing point set. That is, the combined photo photographing area may be an overall photographing area captured by the combined photographing point set.

In an embodiment of the present disclosure, after the actual land occupation area of the plot to be surveyed and mapped is determined, each photographing point in the combined photographing point set may be further mapped to the plot to be surveyed and mapped according to a coverage relationship between the combined photo photographing area corresponding to the combined photographing point set and the actual land occupation area of the plot to be surveyed and mapped. Optionally, if the combined photo photographing area corresponding to the combined photographing point set can completely cover the actual land occupation area of the plot to be surveyed and mapped, it indicates that the combined photo photographing area corresponding to a single combined photographing point set can obtain the complete image information of the plot to be surveyed and mapped, then each photographing point in the combined photographing point set may be mapped to the plot to be surveyed and mapped directly according to the preset relative position relationship between each two photographing points in the combined photographing point set. Or, when it is determined that the new combined photographing point set can completely cover the actual land occupation area of the plot to be surveyed and mapped, each photographing point in the combined photographing point set may be mapped to the plot to be surveyed and mapped according to the preset relative position relationship between each two photographing points in the combined photographing point set.

In an optional embodiment of the present disclosure, the determining that a combined photo photographing area corresponding to the combined photographing point set completely covers an actual land occupation area of the plot to be surveyed and mapped may include: if an actual land occupation length of the actual land occupation area is less than or equal to a combined photographing length of the combined photo photographing area, and an actual land occupation width of the actual land occupation area is less than or equal to a combined photographing width of the combined photo photographing area, determining that the combined photo photographing area completely covers the actual land occupation area of the plot to be surveyed and mapped.

The mapping each photographing point in the combined photographing point set to the plot to be surveyed and mapped may include: mapping the central photographing point in the combined photographing point set to a plot midpoint of the plot to be surveyed and mapped; and mapping each peripheral photographing point to the plot to be surveyed and mapped according to a preset relative position relationship between each peripheral photographing point and the central photographing point in the combined photographing point set.

In the embodiment of the present disclosure, the control terminal may judge whether the combined photo photographing area can completely cover the actual land occupation area of the plot to be surveyed and mapped according to the obtained length information of each side in the actual land occupation area and each side length in the combined photo photographing area. Optionally, if the actual land occupation length of the actual land occupation area is less than or equal to the combined photographing length of the combined photo photographing area, and the actual land occupation width of the actual land occupation area is less than or equal to the combined photographing width of the combined photo photographing area, it is determined that the combined photo photographing area can completely cover the actual land occupation area of the plot to be surveyed and mapped. At this time, optionally, the central photographing point in the combined photographing point set may be mapped directly to the plot midpoint of the plot to be surveyed and mapped; and each peripheral photographing point may be mapped to a corresponding photographing position point of the plot to be surveyed and mapped according to the preset relative position relationship between each peripheral photographing point and the central photographing point in the combined photographing point set.

Step 270: sending each of the sample points for surveying and mapping to the unmanned aerial vehicle for surveying and mapping, so that a surveying and mapping photo collection corresponding to the plot to be surveyed and mapped is taken by the unmanned aerial vehicle for surveying and mapping when the unmanned aerial vehicle for surveying and mapping flies to each of the sample points for surveying and mapping according to the set flight altitude.

Correspondingly, in the embodiment of the present disclosure, the control terminal may send the obtained sample points for surveying and mapping to the unmanned aerial vehicle for surveying and mapping, and the unmanned aerial vehicle for surveying and mapping may fly to each of the sample points for surveying and mapping according to the set flight altitude to take photos of the plot to be surveyed and mapped, and thereby the surveying and mapping photo collection is obtained. Each photo in the surveying and mapping photo collection may be configured to be synthesized into a surveying and mapping image that matches the plot to be surveyed and mapped.

Adopting the above technical solution, by determining the actual land occupation area of the plot to be surveyed and mapped, and when it is determined that the combined photo photographing area corresponding to the combined photographing point set can completely cover the actual land occupation area of the plot to be surveyed and mapped, mapping, according to the information of the plot to be surveyed and mapped and the preset relative position relationship between each two photographing points in the combined photographing point set, each photographing point in the combined photographing point set to the plot to be surveyed and mapped, to serve as the sample points for surveying and mapping surveyed by the unmanned aerial vehicle for surveying and mapping at the set flight altitude in the plot to be surveyed and mapped, problems of high cost and low surveying and mapping efficiency existing in the prior UAV aerial surveying and mapping methods are solved, the surveying and mapping cost is reduced, and the surveying and mapping efficiency is improved.

Third Embodiment

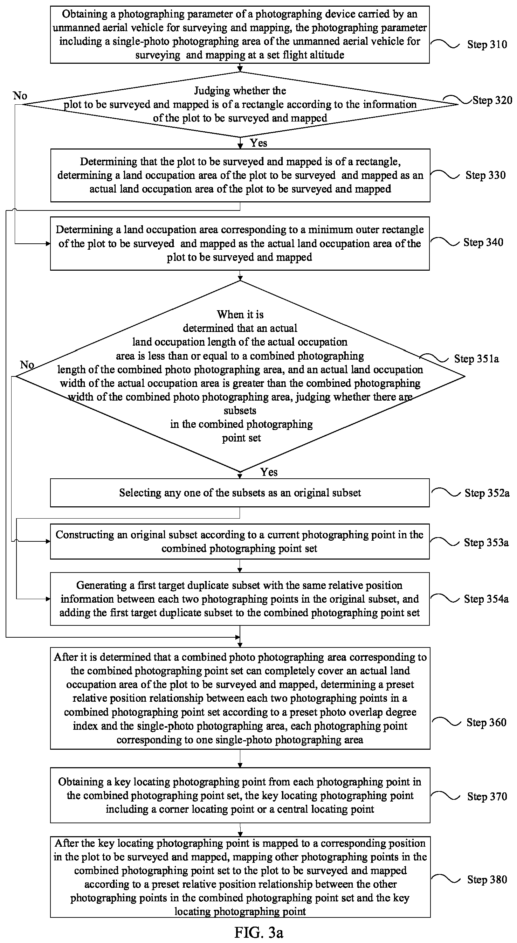

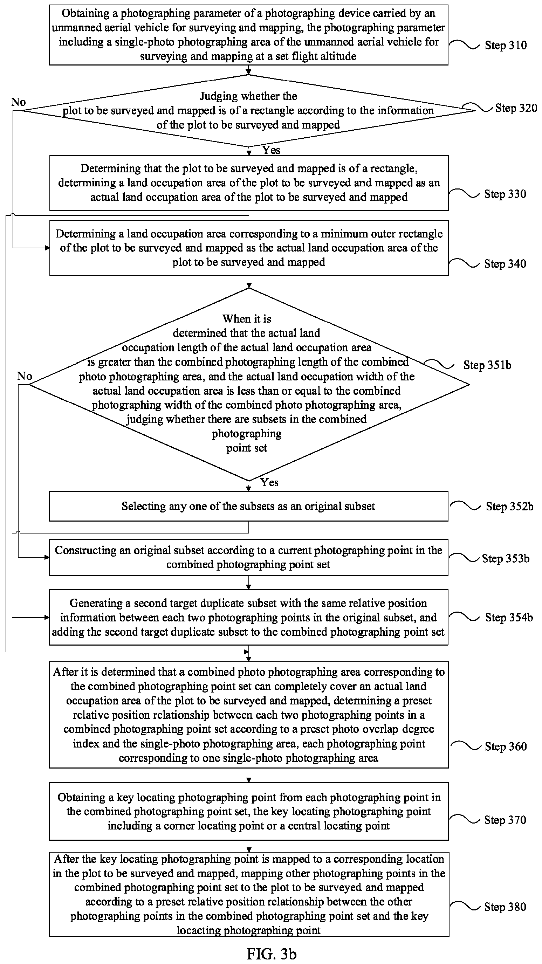

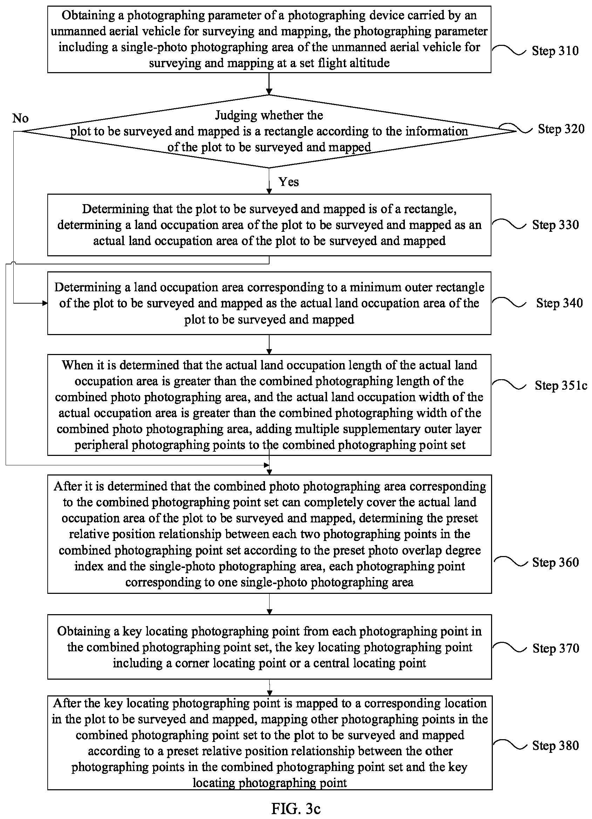

FIG. 3a is a flowchart of a method for planning sample points for surveying and mapping according to a third embodiment of the present disclosure. FIG. 3b is a flowchart of a method for planning sample points for surveying and mapping according to the third embodiment of the present disclosure. FIG. 3c is a flowchart of a method for planning sample points for surveying and mapping according to the third embodiment of the present disclosure. This embodiment is described in detail on the basis of the above-mentioned embodiments. In the embodiment, an implementation manner is given as follows: adding new photographing points to the combined photographing point set to construct a new combined photographing point set according to a coverage of the combined photo photographing area on the plot to be surveyed and mapped. Correspondingly, as shown in FIG. 3a, FIG. 3b and FIG. 3c, the method of the embodiment may include the following contents.

Step 310: obtaining a photographing parameter of a photographing device carried by an unmanned aerial vehicle for surveying and mapping, the photographing parameter including a single-photo photographing area of the unmanned aerial vehicle for surveying and mapping at a set flight altitude.

Step 320: judging whether the plot to be surveyed and mapped is of a rectangle according to information of the plot to be surveyed and mapped, if the plot to be surveyed and mapped is of a rectangle, then executing step 330, otherwise, executing step 340.

Step 330: determining that the plot to be surveyed and mapped is of a rectangle, determining a land occupation area of the plot to be surveyed and mapped as an actual land occupation area of the plot to be surveyed and mapped.

Step 340: determining a land occupation area corresponding to a minimum outer rectangle of the plot to be surveyed and mapped as the actual land occupation area of the plot to be surveyed and mapped.

Step 350: when it is determined that a combined photo photographing area corresponding to the combined photographing point set fails to completely cover the actual land occupation area of the plot to be surveyed and mapped, adding new photographing points to the combined photographing point set to construct a new combined photographing point set according to a coverage of the combined photo photographing area on the plot to be surveyed and mapped.

In the embodiment of the present disclosure, the combined photo photographing area corresponding to the combined photographing point set fails to completely cover the actual land occupation area of the plot to be surveyed and mapped includes three situations in total. The first situation is that the combined photo photographing area corresponding to the combined photographing point set can cover the actual land occupation area of the plot to be surveyed and mapped in a length direction, but fails to cover the actual land occupation area of the plot to be surveyed and mapped in a width direction The second situation is that the combined photo photographing area corresponding to the combined photographing point set fails to cover the actual land occupation area of the plot to be surveyed and mapped in the length direction, but can cover the actual land occupation area of the plot to be surveyed and mapped in the width direction The third situation is that the combined photo photographing area corresponding to the combined photographing point set fails to cover the actual land occupation area of the plot to be surveyed and mapped in both the length and width directions.

Correspondingly, as shown in FIG. 3a, FIG. 3b, and FIG. 3c, the step 350 may include three parallel operations: step 351a-step 354a, step 351b-step 354b, and step 351c.

Step 351a: when it is determined that an actual land occupation length of the actual occupation area is less than or equal to a combined photographing length of the combined photo photographing area, and an actual land occupation width of the actual occupation area is greater than the combined photographing width of the combined photo photographing area, judging whether there are subsets in the combined photographing point set; if there are subsets in the combined photographing point set, executing step 352a, otherwise, executing step 353a.

In the embodiment of the present disclosure, if the actual land occupation length of the actual occupation area is less than or equal to the combined photographing length of the combined photo photographing area, and the actual land occupation width of the actual occupation area is greater than the combined photographing width of the combined photo photographing area, it indicates that the combined photo photographing area corresponding to the combined photographing point set can cover the actual land occupation area of the plot to be surveyed and mapped in the length direction, but fails to cover the actual land occupation area of the plot to be surveyed and mapped in the width direction At this time, it may be judged whether there are subsets in the combined photographing point set. The number of photographing points included in each subset and the preset relative position relationship between each two photographing points included in each subset are consistent with that of an original combined photographing point set.

Step 352a: selecting any one of the subsets as an original subset.

Correspondingly, if it is determined that there are subsets in the photographing point set, any one of the subsets may be selected as the original subset from the subsets, and step 354a is executed.

Step 353a: constructing an original subset according to a current photographing point in the combined photographing point set, and executing step 354a.

Correspondingly, if it is determined that there are no subsets in the photographing point set, a set consisted of the current photographing points in the combined photographing point set may be directly used as the original subset.

Step 354a: generating a first target duplicate subset with the same relative position information between each two photographing points in the original subset, and adding the first target duplicate subset to the combined photographing point set.

Each photographing point in the first target duplicate subset is located directly above a corresponding photographing point in an uppermost subset in the combined photographing point set, or each photographing point in the first target duplicate subset is located directly below a corresponding photographing point in a lowest subset in the combined photographing point set.

The first target duplicate subset may be a subset with the same relative position information between each two photographing points in the original subset.

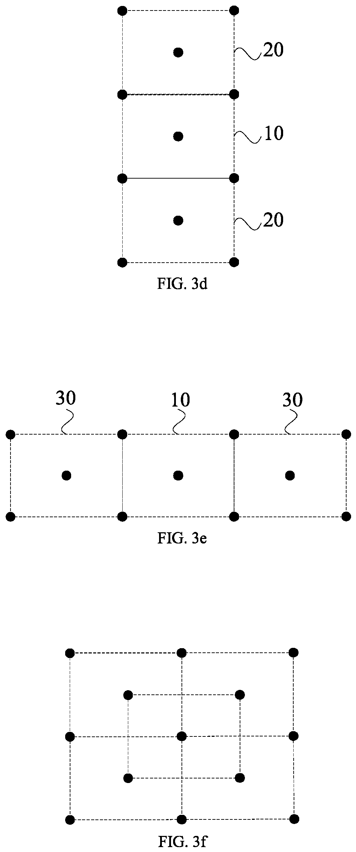

FIG. 3d is a schematic diagram of adding a first target duplicate subset to a combined photographing point set according to the third embodiment of the present disclosure. In the embodiment of the present disclosure, as shown in FIG. 3d, the first target duplicate subset 20 may be generated by copying from the original subset 10, and the first target duplicate subset 20 may be added directly above a corresponding photographing point in the uppermost subset in the combined photographing point set, or may be added directly below a corresponding photographing point in the lowest subset in the combined photographing point set. That is, in the width direction of the actual land occupation area, the first target duplicate subsets may be filled according to an end-to-end manner (typically, according a certain overlap degree index in an end-to-end manner), until it is determined that the new combined photographing point set formed by the combination of each subset can completely cover the actual land occupation area of the plot to be surveyed and mapped.

Step 351b: when it is determined that the actual land occupation length of the actual land occupation area is greater than the combined photographing length of the combined photo photographing area, and the actual land occupation width of the actual land occupation area is less than or equal to the combined photographing width of the combined photo photographing area, judging whether there are subsets in the combined photographing point set; if there are subsets in the combined photographing point set, executing step 352b, otherwise, executing step 353b.

In the embodiment of the present disclosure, if the actual land occupation length of the actual land occupation area is greater than the combined photographing length of the combined photo photographing area, and the actual land occupation width of the actual land occupation area is less than or equal to the combined photographing width of the combined photo photographing area, it indicates that the combined photo photographing area corresponding to the combined photographing point set fails to cover the actual land occupation area of the plot to be surveyed and mapped in the length direction, but can cover the actual land occupation area of the plot to be surveyed and mapped in the width direction At this time, it is still judged whether there are subsets in the combined photographing point set. The number of photographing points included in each subset and the preset relative position relationship between each two photographing points included in each subset are consistent with that of the original combined photographing point set.

Step 352b: selecting any one of the subsets as an original subset.

Correspondingly, if it is determined that there are subsets in the photographing point set, any one of the subsets may be selected as the original subset, and step 354b is executed.

Step 353b: constructing an original subset according to a current photographing point in the combined photographing point set, and executing step 354b.

Correspondingly, if it is determined that there are no subsets in the photographing point set, a set consisted of the current photographing points in the combined photographing point set may be directly used as the original subset.

Step 354b: generating a second target duplicate subset with the same relative position information between each two photographing points in the original subset, and adding the second target duplicate subset to the combined photographing point set.

Each photographing point in the second target duplicate subset is located directly on the left of a corresponding photographing point in a leftmost subset in the combined photographing point set, or each photographing point in the second target duplicate subset is located directly on the right of a corresponding photographing point in a rightmost subset in the combined photographing point set.

The second target duplicate subset may also be a subset with the same relative position information between each two photographing points in the original subset.

FIG. 3e is a schematic diagram of adding a second target duplicate subset to a combined photographing point set according to the third embodiment of the present disclosure. In the embodiment of the present disclosure, as shown in FIG. 3e, the second target duplicate subset 30 may be generated by copying from the original subset 10, and the second target duplicate subset 30 may be added directly on the left of a corresponding photographing point in the leftmost subset in the combined photographing point set, or added directly on the right of a corresponding photographing point in the rightmost subset in the combined photographing point set. That is, in the length direction of the actual land occupation area, the second target duplicate subset may be filled in an end-to-end manner, until it is determined that the new combined photographing point set formed by the combination of each subset can completely cover the actual land occupation area of the plot to be surveyed and mapped.

Step 351c: when it is determined that the actual land occupation length of the actual land occupation area is greater than the combined photographing length of the combined photo photographing area, and the actual land occupation width of the actual occupation area is greater than the combined photographing width of the combined photo photographing area, adding multiple supplementary outer layer peripheral photographing points to the combined photographing point set.

The supplementary outer layer peripheral photographing points are vertices of a rectangle centered on each peripheral photographing point of an outermost layer of the combined photographing point set.

In the embodiment of the present disclosure, if the actual land occupation length of the actual land occupation area is greater than the combined photographing length of the combined photo photographing area, and the actual land occupation width of the actual land occupation area is greater than the combined photographing width of the combined photo photographing area, it indicates that the combined photo photographing area corresponding to the combined photographing point set fails to cover the actual land occupation area of the plot to be surveyed and mapped in both the length and width directions. In this case, the multiple supplementary outer layer peripheral photographing points may be added to the combined photographing point set. FIG. 3f is a schematic diagram of adding multiple supplementary outer layer peripheral photographing points to a combined photographing point set according to the third embodiment of the present disclosure. Exemplary, as shown in FIG. 3f, a peripheral photographing point in the outermost layer in the combined photographing point set may be used as a new central photographing point, and peripheral photographing points may be supplemented according to the preset relative position relationship between each two of five photographing points in the original combined photographing point set. When it is determined that the new combined photographing point set formed by each supplementary outer layer peripheral photographing point and the original combined photographing point set can completely cover the actual land occupation area of the plot to be surveyed and mapped in the length or width direction, the new combined photographing point sets as the subset are filled in the end-to-end manner above-mentioned in the length or width direction, until it is determined that the new combined photographing point sets formed by the combination of each subset can completely cover the actual land occupation area of the plot to be surveyed and mapped.

Step 360: after it is determined that the combined photo photographing area corresponding to the combined photographing point set can completely cover the actual land occupation area of the plot to be surveyed and mapped, determining the preset relative position relationship between each two photographing points in the combined photographing point set according to the preset photo overlap degree index and the single-photo photographing area, each photographing point corresponding to one single-photo photographing area.

Correspondingly, in an optional embodiment of the present disclosure, the determining the preset relative position relationship between each two photographing points in the combined photographing point set according to the preset photo overlap degree index and the single-photo photographing area may include:

determining a size of a single photo according to a frame size of the photographing device and a pixel width of the photographing device;

if the combined photographing point set includes at least two subsets, obtaining a subset at a furthest end in a direction as a target operation subset;

obtaining a central photographing point in the target operation subset;

constructing a two-dimensional coordinate system, and selecting a target point in the two-dimensional coordinate system as the central photographing point in the target operation subset;

calculating, from an inner layer to an outer layer in the target operation subset, a coordinate value of each peripheral photographing point in the two-dimensional coordinate system according to the central photographing point in the target operation subset, the size of the single photo, a mapping relationship between the size of the single photo and the single-photo photographing area, a first photo overlap degree index, and the number of layers of peripheral photographing points corresponding to the target operation subset, the first photo overlap degree index being an overlap between a photo taken at an outer layer photographing point and a photo taken at a corresponding inner layer photographing point;

obtaining, within the combined photographing point set, a subset whose central photographing point is closest to the central photographing point in the target operation subset as a new target operation subset;

determining, in the two-dimensional coordinate system, a coordinate value of each photographing point in the new target operation subset according to a second photo overlap degree index and a coordinate value of each photographing point in a previous target operation subset in the two-dimensional coordinate system, the second photo overlap degree index being an overlap between photos taken at two adjacent outermost layer photographing points in the previous target operation subset and the new target operation subset; and

returning to perform an operation of obtaining, within the combined photographing point set, a subset whose central photographing point is closest to the central photographing point in the target operation subset as a new target operation subset, until processing for all subsets in the combined photographing point set is completed.

The target operation subset may be currently being processed, and set as a subset that determines the relative position between each two photographing points in the subset.

In the embodiment of the present disclosure, when the preset relative position relationship between each two photographing points in the combined photographing point set is determined, the size of the single photo may be determined firstly according to the frame size of the photographing device and the pixel width of the photographing device. The size of the single photo is equal to the frame size multiplied by the pixel width (namely, a length of the single-photo is equal to a frame length multiplied by the pixel width; a width of the single-photo is equal to a frame width multiplied by the pixel width). Considering that the combined photo photographing area corresponding to the original combined photographing point set fails to completely cover the actual land occupation area of the plot to be surveyed and mapped, the constructed new combined photographing point set may include multiple photographing points. At this time, when the relative position between each two photographing points in the combined photographing point set is determined, it may be determined in sequence with each subset in the combined photographing point set as a unit. Optionally, if the combined photographing point set includes the at least two subsets, a subset at a furthest end in a direction is obtained as the target operation subset. Exemplarily, a leftmost (uppermost) subset or a rightmost (or lowermost) subset of the combined photographing point set is taken as the target operation subset. Then, the central photographing point in the target operation subset is mapped in the two-dimensional coordinate system, and the target point (such as an origin point) in the two-dimensional coordinate system may be directly selected as the central photographing point. After the central photographing point is determined in the two-dimensional coordinate system, the coordinate value of each peripheral photographing point in the two-dimensional coordinate system may be calculated from the inner layer to the outer layer in the target operation subset according to the determined central photographing point in the target operation subset, the size of the single photo, the mapping relationship between the size of the single photo and the single-photo photographing area, the first photo overlap degree index, and the number of layers of the peripheral photographing points corresponding to the target operation subset. The first photo overlap degree index is an overlap between the photo taken at the outer layer photographing point and the photo taken at the corresponding inner layer photographing point. Exemplarily, if the combined photo photographing area can cover the actual land occupation area of the plot to be surveyed and mapped in the length or width direction, the preset relative position relationship between the central photographing point and each peripheral photographing point in each subset is determined and the same as each other. At this time, the inner layer photographing point in the target operation subset is the central photographing point, and the outer layer photographing point has only one layer, i.e., four peripheral photographing points. The first photo overlap degree index is the overlap degree index corresponding to the four peripheral photographing points and the central photographing point. If the combined photo photographing area fails to cover the actual land occupation area of the plot to be surveyed and mapped in both the length and width directions, the outer layer photographing points in the subset may have multiple layers. For example, a first layer is the central photographing point, a second layer is the four peripheral photographing points, and a third layer is eight peripheral photographing points formed by expanding the four peripheral photographing points as the center (as shown in FIG. 3f). At this time, the first photo overlap degree index may be an overlap between the photo taken at the outer layer photographing point and the photo taken at the corresponding inner layer photographing point, for example, an overlap between a photo taken at a photographing point corresponding to a corner point of the third layer and a photo taken under the corner of same azimuth in a corresponding second layer.

Correspondingly, after coordinate values corresponding to all photographing points in the target operation subset are determined, a subset whose central photographing point is closest to the central photographing point in the target operation subset may be further obtained within the combined photographing point set to serve as the new target operation subset. That is, adjacent subsets are sequentially obtained based on the subsets at a furthest end in a direction, and the relative position between each two photographing points in each subset is determined. After the new target operation subset is obtained, a coordinate value of each photographing point in the new target operation subset may be determined in the two-dimensional coordinate system according to the second photo overlap degree index and the coordinate value of each photographing point in a previous target operation subset in the two-dimensional coordinate system. The second photo overlap degree index is an overlap between photos taken at the two adjacent outermost layer photographing points in the previous target operation subset and the new target operation subset. The first photo overlap degree index and the second photo overlap degree index may be the same or different, and the embodiments of the present disclosure are not limited thereto. By analogy, a subset whose central photographing point is closest to the central photographing point in the target operation subset is obtained in turn within the combined photographing point set to serve as the new target operation subset, and the coordinate value of each photographing point in the current target operation subset in the two-dimensional coordinate system is determined, until the processing for all the subsets in the combined photographing point set is completed.

In an example, suppose that the combined photographing point set includes two subsets, a target operation subset has only a central photographing point in an inner layer and four peripheral photographing points in an outer layer. The peripheral photo corresponding to each photographing point at the upper left corner, lower left corner, upper right corner, and lower right corner corresponds to the single-photo photographing area at the upper left corner, lower left corner, upper right corner, and lower right corner, respectively. The size of the single photo is 10 cm*10 cm, the first photo overlap degree index and the second photo overlap degree index are both 50%, and the mapping relationship between the size of the single photo and the single-photo photographing area is 1:200, and thus the single-photo photographing area is 20 m*20 m. If an origin point of the coordinate is adopted as the central photographing point in the target operation subset, the coordinate value of each corresponding peripheral photographing point on the outside may be (-10, 10), (-10, -10), (10, 10), and (10, -10), respectively, in unit of m. Correspondingly, the coordinate value of each photographing point in the new target operation subset in the two-dimensional coordinate system may be that: the coordinate value of the central photographing point is (15, 0), and the coordinate value of each peripheral photographing point on the outside may be (5, 10), (5, -10), (25, 10) and (25, -10), respectively, in unit of m. Correspondingly, after the coordinate value of each photographing point in the combined photographing point set is obtained, the preset relative position relationship between each two photographing points in the combined photographing point set may be determined according to the coordinate values. For example, in the above example, a relative distance between each two photographing points in the outer layer and located at each vertex of the combined photographing point set is 35 m, and a relative distance between the two central photographing points is 15 m.

Step 370: obtaining a key locating photographing point from each photographing point in the combined photographing point set, the key locating photographing point including a corner locating point or a central locating point.

The key locating photographing point may be a photographing point for locating mapped positions of all photographing points in the combined photographing point set. The corner locating point may be one of the four outermost vertices in the combined photographing point set. The central locating point may be a most original central photographing point in the combined photographing point set.

In the embodiment of the present disclosure, before each photographing point in the combined photographing point set is mapped, one photographing point obtained from the photographing points may be used as the key locating photographing point. Exemplarily, a central photographing point or a photographing point corresponding to one of the vertices in the combined photographing point set is used as the key locating photographing point.

Step 380: after the key locating photographing point is mapped to a corresponding position in the plot to be surveyed and mapped, mapping other photographing points in the combined photographing point set to the plot to be surveyed and mapped according to a preset relative position relationship between the other photographing points in the combined photographing point set and the key locating photographing point.

Correspondingly, after the key locating photographing point is determined, the key locating photographing point is mapped to the corresponding position in the plot to be surveyed and mapped, and then the other photographing points in the combined photographing point set are mapped to the plot to be surveyed and mapped according to the preset relative position relationship between the other photographing points in the combined photographing point set and the key locating photographing point. Exemplarily, the key locating photographing point used as the central photographing point is mapped to the central point of the plot to be surveyed and mapped, and the preset relative position relationship between the other photographing points in the combined photographing point set and the central photographing point are mapped respectively. When the mapping is performed, in addition to considering the preset relative position relationship between the other photographing points in the combined photographing point set and the key locating photographing point, it should also be determined that the combined photo photographing area corresponding to the combined photographing point set matches the actual land occupation area of the plot to be surveyed and mapped in both the length and width directions, to ensure that after the mapping is completed, the combined photo photographing area corresponding to the combined photographing point set can completely cover the actual land occupation area of the plot to be surveyed and mapped.

The step 351a to the step 354a, the step 351b to the step 354b, and the step 351c are three parallel operations. There is no order of execution among the above three parallel operations, and any one may be implemented alternatively.

Adopting the above technical solution, by adding the new photographing points to the combined photographing point set to construct the new combined photographing point set according to the coverage of the combined photo photographing area on the plot to be surveyed and mapped; after it is determined that the combined photo photographing area corresponding to the combined photographing point set completely covers the actual land occupation area of the plot to be surveyed and mapped, determining the preset relative position relationship between each two photographing points in the combined photographing point set according to the preset photo overlap degree index and the single-photo photographing area; and mapping, according to the information of the plot to be surveyed and mapped and the preset relative position relationship between each two photographing points in the combined photographing point set, each photographing point in the combined photographing point set to the plot to be surveyed and mapped, to serve as the sample points for surveying and mapping surveyed by the unmanned aerial vehicle for surveying and mapping at the set flight altitude in the plot to be surveyed and mapped, the problems of high cost and low surveying and mapping efficiency existing in the prior UAV aerial surveying and mapping methods are solved, the surveying and mapping cost is reduced, and the surveying and mapping efficiency is improved.

Fourth Embodiment

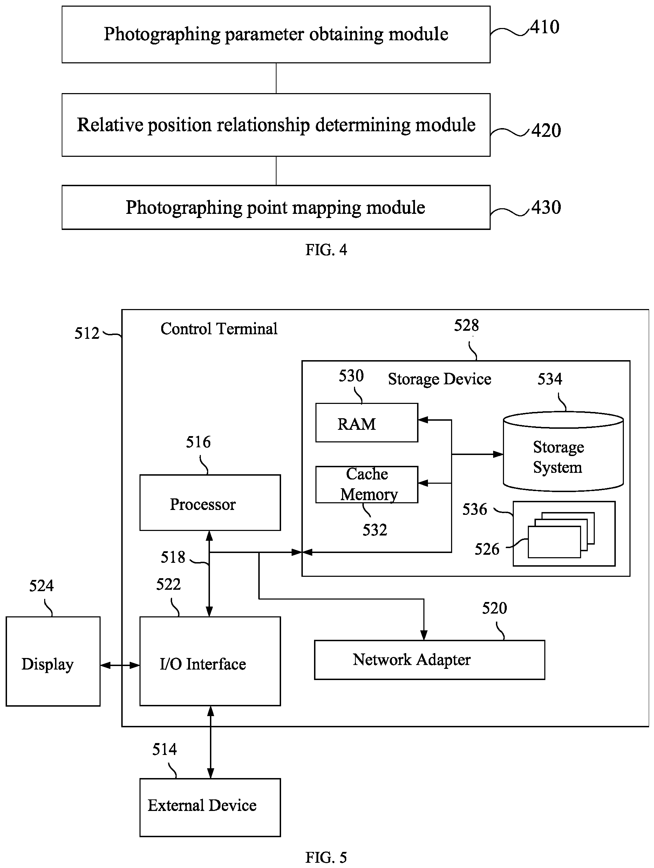

FIG. 4 is a schematic diagram of a device for planning sample points for surveying and mapping according to a fourth embodiment of the present disclosure. As shown in FIG. 4, the device includes a photographing parameter obtaining module 410, a relative position relationship determining module 420 and a photographing point mapping module 430.

The photographing parameter obtaining module 410 is configured to obtain a photographing parameter of a photographing device carried by an unmanned aerial vehicle for surveying and mapping, the photographing parameter including a single-photo photographing area of the unmanned aerial vehicle for surveying and mapping at a set flight altitude.

The relative position relationship determining module 420 is configured to determine a preset relative position relationship between each two photographing points in a combined photographing point set according to a preset photo overlap degree index and the single-photo photographing area, each photographing point corresponding to one single-photo photographing area.

The photographing point mapping module 430 is configured to map, according to information of the plot to be surveyed and mapped and the preset relative position relationship between each two photographing points in the combined photographing point set, each photographing point in the combined photographing point set to the plot to be surveyed and mapped, to serve as the sample points for surveying and mapping surveyed by the unmanned aerial vehicle for surveying and mapping at the set flight altitude in the plot to be surveyed and mapped.

In the embodiments of the present disclosure, by obtaining the single-photo photographing area of the unmanned aerial vehicle for surveying and mapping at the set flight altitude; determining the preset relative position relationship between each two photographing points in the combined photographing point set according to the preset photo overlap degree index and the single-photo photographing area; and mapping, according to the information of the plot to be surveyed and mapped and the preset relative position relationship between each two photographing points in the combined photographing point set, each photographing point in the combined photographing point set to the plot to be surveyed and mapped, to serve as the sample points for surveying and mapping surveyed by the unmanned aerial vehicle for surveying and mapping at the set flight altitude in the plot to be surveyed and mapped, the problems of high cost and low surveying and mapping efficiency existing in the prior UAV aerial surveying and mapping methods are solved, the surveying and mapping cost is reduced, and the surveying and mapping efficiency is improved.

Initial photographing points in the combined photographing point set include: a central photographing point and four peripheral photographing points, the four peripheral photographing points are four vertices of a rectangle centered on the central photographing point; and a composite photo obtained by photographing based on all photographing points in the combined photographing point set is of a rectangle.

Optionally, the device further includes a first actual land occupation area determining module, configured to determine a land occupation area of the plot to be surveyed and mapped as an actual land occupation area of the plot to be surveyed and mapped if it is determined that the plot to be surveyed and mapped is of a rectangle according to the information of the plot to be surveyed and mapped; and a second actual land occupation area determining module, configured to determine a land occupation area corresponding to a minimum outer rectangle of the plot to be surveyed and mapped as the actual land occupation area of the plot to be surveyed and mapped if it is determined that the plot to be surveyed and mapped is of non-rectangular according to the information of the plot to be surveyed and mapped.

Optionally, the photographing point mapping module 430 is configured to map each photographing point in the combined photographing point set to the plot to be surveyed and mapped according to the preset relative position relationship between each two photographing points in the combined photographing point set if it is determined that a combined photo photographing area corresponding to the combined photographing point set completely covers an actual land occupation area of the plot to be surveyed and mapped.

Optionally, the photographing point mapping module 430 is configured to add new photographing points to the combined photographing point set to construct a new combined photographing point set according to a coverage of the combined photo photographing area on the plot to be surveyed and mapped if it is determined that a combined photo photographing area corresponding to the combined photographing point set fails to completely cover an actual land occupation area of the plot to be surveyed and mapped; return to perform an operation of determining a preset relative position relationship between each two photographing points in a combined photographing point set according to a preset photo overlap degree index and the single-photo photographing area, until it is determined that a combined photo photographing area corresponding to the combined photographing point set completely covers an actual land occupation area of the plot to be surveyed and mapped; and map each photographing point in the combined photographing point set to the plot to be surveyed and mapped according to the preset relative position relationship between each two photographing points in the combined photographing point set.

Optionally, the relative position relationship determining module 420 is configured to determine a size of a single photo according to a frame size of the photographing device and a pixel width of the photographing device; construct a two-dimensional coordinate system, and select a target point in the two-dimensional coordinate system as the central photographing point; generate a central photo in the two-dimensional coordinate system according to the central photographing point and the size of the single photo; generate four peripheral photos that meet the preset photo overlap degree index with the central photo at an upper left corner, a lower left corner, an upper right corner, and a lower right corner of the central photo, respectively; determine, in the two-dimensional coordinate system, a coordinate value of a peripheral photographing point corresponding to each peripheral photo according to a mapping relationship between the size of the single photo and the single-photo photographing area; and determine the preset relative position relation between each two photographing points in the combined photographing point set according to coordinate values of the central photographing point and each peripheral photographing point in the two-dimensional coordinate system.

Optionally, the photographing point mapping module 430 is configured to determine that the combined photo photographing area completely covers the actual land occupation area of the plot to be surveyed and mapped if an actual land occupation length of the actual land occupation area is less than or equal to a combined photographing length of the combined photo photographing area, and an actual land occupation width of the actual land occupation area is less than or equal to a combined photographing width of the combined photo photographing area; map the central photographing point in the combined photographing point set to a plot midpoint of the plot to be surveyed and mapped; and map each peripheral photographing point to the plot to be surveyed and mapped according to a preset relative position relationship between each peripheral photographing point and the central photographing point in the combined photographing point set.

Optionally, the photographing point mapping module 430 is configured to determine that the combined photo photographing area fails to completely cover the actual land occupation area of the plot to be surveyed and mapped if an actual land occupation length of the actual land occupation area is greater than a combined photographing length of the combined photo photographing area, or an actual land occupation width of the actual land occupation area is greater than a combined photographing width of the combined photo photographing area.

Optionally, the photographing point mapping module 430 is configured to judge whether there are subsets in the combined photographing point set if the actual land occupation length of the actual occupation area is less than or equal to the combined photographing length of the combined photo photographing area, and the actual land occupation width of the actual occupation area is greater than the combined photographing width of the combined photo photographing area; select any one of the subsets as an original subset if there are subsets in the combined photographing point set; construct the original subset according to a current photographing point in the combined photographing point set if there are no subsets in the combined photographing point set; generate a first target duplicate subset with the same relative position information between each two photographing points in the original subset, and add the first target duplicate subset to the combined photographing point set. Each photographing point in the first target duplicate subset is located directly above a corresponding photographing point in an uppermost subset in the combined photographing point set, or each photographing point in the first target duplicate subset is located directly below a corresponding photographing point in a lowest subset in the combined photographing point set.

Optionally, the photographing point mapping module 430 is configured to judge whether there are subsets in the combined photographing point set if the actual occupation length of the actual occupation area is greater than the combined photographing length of the combined photo photographing area, and the actual occupation width of the actual occupation area is less than or equal to the combined photographing width of the combined photo photographing area; select any one of the subsets as an original subset if there are subsets in the combined photographing point set; construct the original subset according to a current photographing point in the combined photographing point set if there are no subsets in the combined photographing point set; generate a second target duplicate subset with the same relative position information between each two photographing points in the original subset, and add the second target duplicate subset to the combined photographing point set. Each photographing point in the second target duplicate subset is located directly on the left of a corresponding photographing point in a leftmost subset in the combined photographing point set, or each photographing point in the second target duplicate subset is located directly on the right of a corresponding photographing point in a rightmost subset in the combined photographing point set.

Optionally, the photographing point mapping module 430 is configured to add multiple supplementary outer layer peripheral photographing points in the combined photographing point set if the actual land occupation length of the actual land occupation area is greater than the combined photographing length of the combined photo photographing area, and the actual land occupation width of the actual occupation area is greater than the combined photographing width of the combined photo photographing area. The multiple supplementary outer layer peripheral photographing points are vertices of a rectangle centered on each peripheral photographing point of an outermost layer of the combined photographing point set.

Optionally, the relative position relationship determining module 420 is configured to determine a size of a single photo according to a frame size of the photographing device and a pixel width of the photographing device; obtain a subset at a furthest end in a direction as a target operation subset if the combined photographing point set includes at least two subsets, obtain a central photographing point in the target operation subset; construct a two-dimensional coordinate system, and select a target point in the two-dimensional coordinate system as the central photographing point in the target operation subset; calculate, from an inner layer to an outer layer in the target operation subset, a coordinate value of each peripheral photographing point in the two-dimensional coordinate system according to the central photographing point in the target operation subset, the size of the single photo, a mapping relationship between the size of the single photo and the single-photo photographing area, a first photo overlap degree index, and the number of layers of peripheral photographing points corresponding to the target operation subset, the first photo overlap degree index being an overlap between a photo taken at an outer layer photographing point and a photo taken at a corresponding inner layer photographing point; obtain, within the combined photographing point set, a subset whose central photographing point is closest to the central photographing point in the target operation subset as a new target operation subset; determine, in the two-dimensional coordinate system, a coordinate value of each photographing point in the new target operation subset according to a second photo overlap degree index and a coordinate value of each photographing point in a previous target operation subset in the two-dimensional coordinate system, the second photo overlap degree index being an overlap between photos taken at two adjacent outermost layer photographing points in the previous target operation subset and the new target operation subset; and return to perform an operation of obtaining, within the combined photographing point set, a subset whose central photographing point is closest to the central photographing point in the target operation subset as a new target operation subset, until processing for all subsets in the combined photographing point set is completed.

Optionally, the photographing point mapping module 430 is configured to obtain a key locating photographing point from each photographing point in the combined photographing point set, the key locating photographing point including a corner locating point or a central locating point; and map other photographing points in the combined photographing point set to the plot to be surveyed and mapped according to a preset relative position relationship between the other photographing points in the combined photographing point set and the key locating photographing point after the key locating photographing point is mapped to a corresponding position in the plot to be surveyed and mapped.

Optionally, the device further includes: a set flight altitude calculating module, configured to calculate the set flight altitude according to a pixel width of the photographing device, a lens focal length of the photographing device, and a ground pixel resolution.

Optionally, the photographing parameter obtaining module 410 is configured to calculate the single-photo photographing area of the unmanned aerial vehicle for surveying and mapping at the set flight altitude according to a pixel width of the photographing device, a frame size of the photographing device, and a ground pixel resolution.

Optionally, the device further includes: a sample point for surveying and mapping sending module, configured to send each of the sample points for surveying and mapping to the unmanned aerial vehicle for surveying and mapping, so that a surveying and mapping photo collection corresponding to the plot to be surveyed and mapped is taken by the unmanned aerial vehicle for surveying and mapping when the unmanned aerial vehicle for surveying and mapping flies to each of the sample points for surveying and mapping according to the set flight altitude; and set each photo in the surveying and mapping photo collection to be synthesized into a surveying and mapping image that matches the plot to be surveyed and mapped.

The device for planning sample points for surveying and mapping described above may execute a method for planning sample points for surveying and mapping provided by any embodiment of the present disclosure, and the device has functional modules and advantageous effects corresponding to the executed method. For technical details that are not described in detail in the embodiments, it may refer to the method for planning sample points for surveying and mapping provided by any embodiment of the present disclosure.

Fifth Embodiment (not covered by the subject-matter of the claims)

FIG. 5 is a schematic structural diagram of a control terminal for controlling an unmanned aerial vehicle according to a fifth embodiment of the present disclosure. FIG. 5 shows a block diagram of the control terminal 512 suitable for implementing the embodiments of the present disclosure. The control terminal 512 shown in FIG. 5 is merely an example, and it should not be intended to limit functions and applicable scopes of the embodiments of the present disclosure.

As shown in FIG. 5, the control terminal 512 is represented as a general-purpose computing device. Components of the control terminal 512 may include, but are not limited to, one or more processors 516, a storage apparatus 528, and a bus 518 that couples different system components (including the storage apparatus 528 and the one or more processors 516).

The bus 518 refers to one or more kinds of bus architectures, including a memory bus or a memory controller, a peripheral bus, an accelerated graphics port, a processor, or local bus using any bus architecture of various kinds of bus architectures. For example, these architectures include, but are not limited to, an Industry Standard Architecture (ISA) bus, a Micro Channel Architecture (MCA) bus, an enhanced Industry Standard Architecture (ISA) bus, a Video Electronics Standards Association (VESA) local bus, and a Peripheral Component Interconnect (PCI) bus.

Typically, the control terminal 512 includes various kinds of computer system readable medium. These medium may be any available medium that are accessible by the control terminal 512. These medium include volatile and non-volatile medium, and removable and non-removable medium.

The storage device 528 may include computer system readable medium in the form of volatile memory, such as a Random Access Memory (RAM) 530 and/or a cache memory 532. The control terminal 512 may further include other removable and non-removable, and volatile and non-volatile computer system storage medium. For example, a storage system 534 may be provided for reading from and writing to a non-removable and non-volatile magnetic medium (not shown in FIG. 5 and typically called as a "hard drive"). Although the medium is not shown in FIG. 5, a magnetic disk drive for reading from or writing to a removable and non-volatile magnetic disk (such as a "floppy disk"), and an optical disk drive for reading from or writing to a removable and non-volatile optical disk (such as a Compact Disc-Read Only Memory (CD-ROM), a Digital Video Disc-Read Only Memory (DVD-ROM) or other optical medium) may be provided. In such cases, each drive may be connected with the bus 518 by one or more data medium interfaces. The storage apparatus 528 may include at least one program product having a set (such as at least one) of program modules that are configured to execute functions of each embodiment of the present disclosure.

For example, a program 536, having a set (at least one) of the program modules 526, may be stored in the storage apparatus 528. The program modules 526 include, but are not limited to, an operating system, one or more application programs, other program modules and program data. Each or some combination of these examples may include implementation of a networking environment. Generally, the program modules 526 generally execute functions and/or methods of the embodiments described in the present disclosure.

The control terminal 512 may also communicate with one or more external device 514 (such as a keyboard, pointing equipment, a camera, a display 524 and the like), and may also communicate with one or more device that enable a user to interact with the control terminal 512, and/or any device (such as a network card, a modem, and the like) that enable the control terminal 512 to communicate with one or more other computing devices. Such communication may occur via an Input / Output (I/O) interface 522. In addition, the control terminal 512 may also communicate with one or more networks (such as a Local Area Network (LAN), a Wide Area Network (WAN), and/or a public network (such as the Internet)) by a network adapter 520. As shown in FIG. 5, the network adapter 520 communicates with the other modules of the control terminal 512 by the bus 518. It should be appreciated that although not shown in FIG. 5, other hardware and/or software modules may be used in combination with the control terminal 512, which include, but are not limited to, microcode, a device driver, a redundant processing unit, an external magnetic disk drive array, a Redundant Arrays of Independent Disks (RAID) system, a magnetic tape drive, a data archival storage system, and the like.

The processor 516 executes each functional application and data processing, for example, the method for planning sample points for surveying and mapping provided by the embodiments of the present disclosure, by running a program stored in the storage apparatus 528.

I.e., when executing the program, the processing unit implements the following steps: obtaining a photographing parameter of a photographing device carried by an unmanned aerial vehicle for surveying and mapping; determining a preset relative position relationship between each two photographing points in a combined photographing point set according to a preset photo overlap degree index and the single-photo photographing area, each photographing point corresponding to one single-photo photographing area; mapping, according to information of the plot to be surveyed and mapped and the preset relative position relationship between each two photographing points in the combined photographing point set, each photographing point in the combined photographing point set to the plot to be surveyed and mapped, to serve as the sample points for surveying and mapping surveyed by the unmanned aerial vehicle for surveying and mapping at the set flight altitude in the plot to be surveyed and mapped.

Sixth Embodiment (not covered by the subject-matter of the claims)

The sixth embodiment of the present disclosure further provides a computer storage medium storing a computer program, and when executed by a computer processor, the computer program executes a method for planning sample points for surveying and mapping as described in any one of the embodiments of the present disclosure. The method includes: obtaining a photographing parameter of a photographing device carried by an unmanned aerial vehicle for surveying and mapping; determining a preset relative position relationship between each two photographing points in a combined photographing point set according to a preset photo overlap degree index and the single-photo photographing area, each photographing point corresponding to one single-photo photographing area; mapping, according to information of the plot to be surveyed and mapped and the preset relative position relationship between each two photographing points in the combined photographing point set, each photographing point in the combined photographing point set to the plot to be surveyed and mapped, to serve as the sample points for surveying and mapping surveyed by the unmanned aerial vehicle for surveying and mapping at the set flight altitude in the plot to be surveyed and mapped.

Any combination of one or more computer readable medium may be adopted as the computer storage medium in the embodiments of the present disclosure. The computer readable medium may be a computer readable signal medium or a computer readable storage medium. The computer readable storage medium may be, for example but not limited to, one or any combination of electric, magnetic, optical, electromagnetic, infrared, and semi-conductive system, apparatus and device. More detailed examples (a non-exhaustive list) of the computer readable storage medium include: an electrical connection having one or more wires, a portable computer magnetic disk, a hard disk, a RAM, a Read Only Memory (ROM), an Erasable Programmable Read Only Memory ((EPROM) or flash memory), an optical fiber, a portable Compact Disc Read Only Memory (CD-ROM), an optical storage device, a magnetic storage device, any suitable combination of the foregoing. In the present disclosure, the computer readable storage medium may be any tangible medium that contains or stores a program, and the program may be used by or used in combination with an instruction execution system, apparatus or device.

The computer readable signal medium may include a data signal carrying computer readable program codes therein, with the data signal propagated in base band or as part of a carrier wave. Such a propagated data signal may take any of a variety of forms, including, but not limited to, an electromagnetic signal, an optical signal, or any suitable combination thereof. The computer readable signal medium may be any computer readable medium other than the computer readable storage medium, and the computer readable medium may send, propagate, or transport a program used by or used in combination with the instruction execution system, apparatus or device.

Program codes contained on the computer readable medium may be transported by using any suitable medium, including but not limited to, wireless, electric wire, optical fiber cable, Radio Frequency (RF) and the like, or any suitable combination of the foregoing.

Computer program codes for executing operations of the present disclosure may be written in one or more programming languages or any combination thereof. The programming languages include an object-oriented programming language, such as Java, Smalltalk, C++ or the like, and a conventional procedural programming language such as the "C" language or similar programming languages. The program codes may be executed entirely on a user computer, executed partly on the user computer, executed as an independent software package, executed partly on the user computer and partly on a remote computer, or executed entirely on the remote computer or a server. In a scenario involving the remote computer, the remote computer may be connected with the user computer via any kind of network including Local Area Network (LAN) or Wide Area Network (WAN), or may be connected to an external computer (for example, via the Internet using an Internet Service Provider).

Industrial Applicability

The embodiments of the present disclosure provided a method and a device for planning sample points for surveying and mapping, a control terminal and a storage medium. The prior planning manner of moving along parallel lines is replaced by an overall planning manner based on a plurality of points for surveying and mapping in the combined photographing point set, so that problems of high cost and low surveying and mapping efficiency existing in the prior UAV aerial surveying and mapping methods are solved, the surveying and mapping cost is reduced, and the surveying and mapping efficiency is improved.

**Claims**

1. A method for planning sample points for surveying and mapping comprising:

   obtaining (Step 110) a photographing parameter of a photographing device carried by an unmanned aerial vehicle for surveying and mapping, the photographing parameter comprising a single-photo photographing area of the unmanned aerial vehicle for surveying and mapping at a set flight altitude, wherein the single-photo photographing area is equal to a ground pixel resolution multiplied by a frame size; determining (Step 120) a preset relative position relationship between each two photographing points in a combined photographing point set according to a preset photo overlap degree index and the single-photo photographing area, each photographing point corresponding to the single-photo photographing area, wherein the combined photographing point set comprises a central photographing point and four peripheral photographing points, the central photographing point is a center of a rectangle, the four peripheral photographing points are four vertices of the rectangle, such that a complete rectangle photo is obtained when photos taken at all photographing points are combined, and an overlap degree between a photo taken at the central photographing point and a photo taken at each peripheral photographing point is greater than that between two photos respectively taken at each two peripheral photographing points; the preset photo overlap degree index is a percentage of overlap between the photo taken at the central photographing point and the photo taken at each peripheral photographing point; and mapping (Step 130), according to information of the plot to be surveyed and mapped and the preset relative position relationship between each two photographing points in the combined photographing point set, each photographing point in the combined photographing point set to the plot to be surveyed and mapped, to serve as a sample point for surveying and mapping surveyed by the unmanned aerial vehicle for surveying and mapping at the set flight altitude in the plot to be surveyed and mapped, wherein the information of the plot to be surveyed and mapped comprises an area shape or an area size of the plot to be surveyed and mapped, each sample point is a position point, in the plot to be surveyed and mapped, at which the unmanned aerial vehicle performs surveying and mapping

2. The method according to claim 1, wherein before mapping, according to information of the plot to be surveyed and mapped and the preset relative position relationship between each two photographing points in the combined photographing point set, each photographing point in the combined photographing point set to the plot to be surveyed and mapped, the method further comprises:

   if it is determined that the plot to be surveyed and mapped is of a rectangle according to the information of the plot to be surveyed and mapped, determining (Step 230, 330) a land occupation area of the plot to be surveyed and mapped as an actual land occupation area of the plot to be surveyed and mapped; and if it is determined that the plot to be surveyed and mapped is of non-rectangular according to the information of the plot to be surveyed and mapped, determining (Step 240, 340) a land occupation area corresponding to a minimum outer rectangle of the plot to be surveyed and mapped as the actual land occupation area of the plot to be surveyed and mapped.

3. The method according to claim 2, wherein the mapping, according to information of the plot to be surveyed and mapped and the preset relative position relationship between each two photographing points in the combined photographing point set, each photographing point in the combined photographing point set to the plot to be surveyed and mapped, comprises:

if it is determined that a combined photo photographing area corresponding to the combined photographing point set completely covers the actual land occupation area of the plot to be surveyed and mapped, mapping (Step 263) each photographing point in the combined photographing point set to the plot to be surveyed and mapped according to the preset relative position relationship between each two photographing points in the combined photographing point set, wherein the combined photographing area is an area synthesized by photos taken at each photographing point in the combined photographing point set.

4. The method according to claim 2, wherein the mapping, according to information of the plot to be surveyed and mapped and the preset relative position relationship between each two photographing points in the combined photographing point set, each photographing point in the combined photographing point set to the plot to be surveyed and mapped, comprises:

judging (Step 261) whether a combined photo photographing area corresponding to the combined photographing point set completely covers the actual land occupation area of the plot to be surveyed and mapped, wherein the combined photo photographing area is an area synthesized by photos taken at each photographing point in the combined photographing point set;
if it is determined that the combined photo photographing area corresponding to the combined photographing point set fails to completely cover the actual land occupation area of the plot to be surveyed and mapped, adding (Step 262) new photographing points to the combined photographing point set to construct a new combined photographing point set according to a coverage of the combined photo photographing area on the plot to be surveyed and mapped, and returning to executing judging (Step 261) whether the combined photo photographing area corresponding to the combined photographing point set completely covers the actual land occupation area of the plot to be surveyed and mapped ; and
if it is determined that the combined photo photographing area corresponding to the combined photographing point set completely covers the actual land occupation area of the plot to be surveyed and mapped, mapping (Step 263) each photographing point in the combined photographing point set to the plot to be surveyed and mapped according to the preset relative position relationship between each two photographing points in the combined photographing point set.

5. The method according to claim 3, wherein the determining a preset relative position relationship between each two photographing points in a combined photographing point set according to a preset photo overlap degree index and the single-photo photographing area, comprises:

determining a size of a single photo according to a frame size of the photographing device and a pixel width of the photographing device, wherein the size of the single photo is equal to the frame size multiplied by the pixel width;
constructing a two-dimensional coordinate system, and selecting a target point in the two-dimensional coordinate system as the central photographing point;
generating a central photo in the two-dimensional coordinate system according to the central photographing point and the size of the single photo;
generating four peripheral photos that meet the preset photo overlap degree index with the central photo at an upper left corner, a lower left corner, an upper right corner, and a lower right corner of the central photo, respectively;
determining, in the two-dimensional coordinate system, a coordinate value of a peripheral photographing point corresponding to each peripheral photo according to a mapping relationship between the size of the single photo and the single-photo photographing area; and
determining the preset relative position relationship between each two photographing points in the combined photographing point set according to coordinate values of the central photographing point and each peripheral photographing point in the two-dimensional coordinate system.

6. The method according to claim 4, wherein the judging (Step 261) whether a combined photo photographing area corresponding to the combined photographing point set completely covers the actual land occupation area of the plot to be surveyed and mapped, comprises:
if an actual land occupation length of the actual land occupation area is greater than a combined photographing length of the combined photo photographing area, or an actual land occupation width of the actual land occupation area is greater than a combined photographing width of the combined photo photographing area, determining that the combined photo photographing area fails to completely cover the actual land occupation area of the plot to be surveyed and mapped.

7. The method according to claim 6, wherein the adding new photographing points to the combined photographing point set to construct a new combined photographing point set according to a coverage of the combined photo photographing area on the plot to be surveyed and mapped, comprises:

if (Step 351a) the actual land occupation length of the actual occupation area is less than or equal to the combined photographing length of the combined photo photographing area, and the actual land occupation width of the actual occupation area is greater than the combined photographing width of the combined photo photographing area, judging whether there are subsets in the combined photographing point set; if there are subsets in the combined photographing point set, selecting (Step 352a) any one of the subsets as an original subset; if there are no subsets in the combined photographing point set, constructing (Step 353a) an original subset according to a current photographing point in the combined photographing point set; and generating (Step 354a) a first target duplicate subset with the same relative position information between each two photographing points in the original subset, and adding the first target duplicate subset to the combined photographing point set,

wherein each photographing point in the first target duplicate subset is located directly above a corresponding photographing point in an uppermost subset in the combined photographing point set, or each photographing point in the first target duplicate subset is located directly below a corresponding photographing point in a lowest subset in the combined photographing point set.

8. The method according to claim 6, wherein the adding new photographing points to the combined photographing point set to construct a new combined photographing point set according to a coverage of the combined photo photographing area on the plot to be surveyed and mapped, comprises:

if (Step 351b) the actual occupation length of the actual occupation area is greater than the combined photographing length of the combined photo photographing area, and the actual occupation width of the actual occupation area is less than or equal to the combined photographing width of the combined photo photographing area, judging whether there are subsets in the combined photographing point set; if there are subsets in the combined photographing point set, selecting (Step 352b) any one of the subsets as an original subset; if there are no subsets in the combined photographing point set, constructing (Step 353b) an original subset according to a current photographing point in the combined photographing point set; and

generating (Step 354b) a second target duplicate subset with the same relative position information between each two photographing points in the original subset, and adding the second target duplicate subset to the combined photographing point set,

wherein each photographing point in the second target duplicate subset is located directly on the left of a corresponding photographing point in a leftmost subset in the combined photographing point set, or each photographing point in the second target duplicate subset is located directly on the right of a corresponding photographing point in a rightmost subset in the combined photographing point set.

9. The method according to claim 6, wherein the adding new photographing points to the combined photographing point set to construct a new combined photographing point set according to a coverage of the combined photo photographing area on the plot to be surveyed and mapped, comprises:

if (Step 351c) the actual land occupation length of the actual land occupation area is greater than the combined photographing length of the combined photo photographing area, and the actual land occupation width of the actual occupation area is greater than the combined photographing width of the combined photo photographing area, adding multiple supplementary outer layer peripheral photographing points to the combined photographing point set,

wherein the multiple supplementary outer layer peripheral photographing points are vertices of a rectangle centered on each peripheral photographing point of an outermost layer of the combined photographing point set.

10. The method according to any one of claims 7 to 9, wherein the determining a preset relative position relationship between each two photographing points in a combined photographing point set according to a preset photo overlap degree index and the single-photo photographing area, comprises:

determining a size of a single photo according to a frame size of the photographing device and a pixel width of the photographing device, wherein the size of the single photo is equal to the frame size multiplied by the pixel width; if the combined photographing point set comprises at least two subsets, obtaining a subset at a furthest end in a direction as a target operation subset;

obtaining a central photographing point in the target operation subset;

constructing a two-dimensional coordinate system, and selecting a target point in the two-dimensional coordinate system as the central photographing point in the target operation subset;

calculating, from an inner layer to an outer layer in the target operation subset, a coordinate value of each peripheral photographing point in the two-dimensional coordinate system according to the central photographing point in the target operation subset, the size of the single photo, a mapping relationship between the size of the single photo and the single-photo photographing area, a first photo overlap degree index, and the number of layers of peripheral photographing points corresponding to the target operation subset, the first photo overlap degree index being an overlap between a photo taken at an outer layer photographing point and a photo taken at a corresponding inner layer photographing point;

obtaining, within the combined photographing point set, a subset whose central photographing point is closest to the central photographing point in the target operation subset as a new target operation subset;

determining, in the two-dimensional coordinate system, a coordinate value of each photographing point in the new target operation subset according to a second photo overlap degree index and a coordinate value of each photographing point in a previous target operation subset in the two-dimensional coordinate system, the second photo overlap degree index being an overlap between photos taken at two adjacent outermost layer photographing points in the previous target operation subset and the new target operation subset; and

returning to perform an operation of obtaining, within the combined photographing point set, a subset whose central photographing point is closest to the central photographing point in the target operation subset as a new target operation subset, until processing for all subsets in the combined photographing point set is completed.

11. The method according to claim 4, wherein the mapping, according to information of the plot to be surveyed and mapped and the preset relative position relationship between each two photographing points in the combined photographing point set, each photographing point in the combined photographing point set to the plot to be surveyed and mapped, comprises:

obtaining (Step 370) a key locating photographing point from each photographing point in the combined photographing point set, the key locating photographing point comprising a corner locating point or a central locating point; and after (Step 380) the key locating photographing point is mapped to a corresponding position in the plot to be surveyed and mapped, mapping other photographing points in the combined photographing point set to the plot to be surveyed and mapped according to a relative position relationship between the other photographing points in the combined photographing point set and the key locating photographing point.

12. The method according to claim 1, wherein before obtaining a photographing parameter of a photographing device carried by an unmanned aerial vehicle for surveying and mapping, the method further comprises:
calculating the set flight altitude according to a pixel width of the photographing device, a lens focal length of the photographing device, and a ground pixel resolution.

13. The method according to claim 1, wherein after mapping, according to information of the plot to be surveyed and mapped and the preset relative position relationship between each two photographing points in the combined photographing point set, each photographing point in the combined photographing point set to the plot to be surveyed and mapped, the method further comprises:

sending (Step 270) each of the sample points for surveying and mapping to the unmanned aerial vehicle for surveying and mapping, so that a surveying and mapping photo collection corresponding to the plot to be surveyed and mapped is taken by the unmanned aerial vehicle for surveying and mapping when the unmanned aerial vehicle for surveying and mapping flies to each of the sample points for surveying and mapping according to the set flight altitude; and setting each photo in the surveying and mapping photo collection to be synthesized into a surveying and mapping image that matches the plot to be surveyed and mapped.

14. A device for planning sample points for surveying and mapping comprising:

a photographing parameter obtaining module (410), configured to obtain a photographing parameter of a photographing device carried by an unmanned aerial vehicle for surveying and mapping, the photographing parameter comprising a single-photo photographing area of the unmanned aerial vehicle for surveying and mapping at a set flight altitude, wherein the single-photo photographing area is equal to a ground pixel resolution multiplied by a frame size; a preset relative position relationship determining module (420), configured to determine a relative position relationship between each two photographing points in a combined photographing point set according to a preset photo overlap degree index and the single-photo photographing area, each photographing point corresponding to the single-photo photographing area, wherein the combined photographing point set comprises a central photographing point and four peripheral photographing points, the central photographing point is a center of a rectangle, the four peripheral photographing points are four vertices of the rectangle, such that a complete rectangle photo is obtained when photos taken at all photographing points are combined, and an overlap degree between a photo taken at the central photographing point and a photo taken at each peripheral photographing point is greater than that between two photos respectively taken at each two peripheral photographing points; the preset photo overlap degree index is a percentage of overlap between the photo taken at the central photographing point and the photo taken at each peripheral photographing point; and a photographing point mapping module (430), configured to map, according to information of the plot to be surveyed and mapped and the preset relative position relationship between each two photographing points in the combined photographing point set, each photographing point in the combined photographing point set to the plot to be surveyed and mapped, to serve as a sample point for surveying and mapping surveyed by the unmanned aerial vehicle for surveying and mapping at the set flight altitude in the plot to be surveyed and mapped, wherein the information of the plot to be surveyed and mapped comprises an area shape or an area size of the plot to be surveyed and mapped, each sample point is a position point, in the plot to be surveyed and mapped, at which the unmanned aerial vehicle performs surveying and mapping

**Patentansprüche**

1. Ein Verfahren zur Planung von Abtastpunkten zum Vermessen und Abbilden, das Folgendes beinhaltet:

Erhalten (Schritt 110) eines Fotografieparameters einer Fotografievorrichtung, die von einem unbemannten Luftfahrzeug zum Vermessen und Abbilden getragen wird, wobei der Fotografieparameter einen Einzelfotofotografiebereich des unbemannten Luftfahrzeugs zum Vermessen und Abbilden in einer festgelegten Flughöhe beinhaltet, wobei der Einzelfotofotografiebereich gleich einer Bodenpixelauflösung multipliziert mit einer Einzelbildgröße ist; Bestimmen (Schritt 120) einer vorgegebenen Beziehung relativer Positionen zwischen zwei Fotografiepunkten in einem kombinierten Fotografiepunktsatz gemäß einem vorgegebenen Fotoüberlappungsgradindex und dem Einzelfotofotografiebereich, wobei jeder Fotografiepunkt dem Einzelfotofotografiebereich entspricht, wobei der kombinierte Fotografiepunktsatz einen zentralen Fotografiepunkt und vier periphere Fotografiepunkte beinhaltet, wobei der zentrale Fotografiepunkt ein Mittelpunkt eines Rechtecks ist, wobei die vier peripheren Fotografiepunkte vier Eckpunkte des Rechtecks sind, sodass ein Foto des kompletten Rechtecks erhalten wird, wenn Fotos, die an allen Fotografiepunkten gemacht wurden, kombiniert werden und ein Überlappungsgrad zwischen einem Foto, das an dem zentralen Fotografiepunkt gemacht wurde, und einem Foto, das an jedem peripheren Fotografiepunkt gemacht wurde, größer ist als der zwischen zwei Fotos, die jeweils an zwei peripheren Fotografiepunkten gemacht wurden; wobei der vorgegebene Fotoüberlappungsgradindex ein Prozentsatz von Überlappung zwischen dem Foto, das an dem zentralen Fotografiepunkt gemacht wurde, und dem Foto, das an jedem peripheren Fotografiepunkt gemacht wurde, ist; und Abbilden (Schritt 130), gemäß Informationen der zu vermessenden und abzubildenden Fläche und der vorgegebenen Beziehung relativer Positionen zwischen zwei Fotografiepunkten in dem kombinierten Fotografiepunktsatz, jedes Fotografiepunkts in dem kombinierten Fotografiepunktsatz auf die zu vermessende und abzubildende Fläche, um als ein Abtastpunkt zum Vermessen und Abbilden zu dienen, der durch das unbemannte Luftfahrzeug zum Vermessen und Abbilden in der festgelegten Flughöhe in der zu vermessenden und abzubildenden Fläche vermessen wurde, wobei die Informationen der zu vermessenden und abzubildenden Fläche eine Bereichsform oder eine Bereichsgröße der zu vermessenden und abzubildenden Fläche beinhalten, wobei jeder Abtastpunkt ein Positionspunkt in der zu vermessenden und abzubildenden Fläche ist, an dem das unbemannte Luftfahrzeug das Vermessen und Abbilden durchführt.

2. Verfahren gemäß Anspruch 1, wobei vor dem Abbilden, gemäß Informationen der zu vermessenden und abzubildenden Fläche und der vorgegebenen Beziehung relativer Positionen zwischen zwei Fotografiepunkten in dem kombinierten Fotografiepunktsatz, jedes Fotografiepunkts in dem kombinierten Fotografiepunktsatz auf die zu vermessende und abzubildende Fläche das Verfahren ferner Folgendes beinhaltet:

wenn bestimmt wird, dass die zu vermessende und abzubildende Fläche gemäß den Informationen der zu vermessenden und abzubildenden Fläche die eines Rechtecks ist, Bestimmen (Schritt 230, 330) eines Landnutzungsbereichs der zu vermessenden und abzubildenden Fläche als tatsächlicher Landnutzungsbereich der zu vermessenden und abzubildenden Fläche; und
wenn bestimmt wird, dass die zu vermessende und abzubildende Fläche gemäß den Informationen der zu vermessenden und abzubildenden Fläche nicht die eines Rechtecks ist, Bestimmen (Schritt 240, 340) eines Landnutzungsbereichs, der einem minimalen äußeren Rechteck der zu vermessenden und abzubildenden Fläche entspricht, als der tatsächliche Landnutzungsbereich der zu vermessenden und abzubildenden Fläche.

3. Verfahren gemäß Anspruch 2, wobei das Abbilden, gemäß Informationen der zu vermessenden und abzubildenden Fläche und der vorgegebenen Beziehung relativer Positionen zwischen zwei Fotografiepunkten in dem kombinierten Fotografiepunktsatz, jedes Fotografiepunkts in dem kombinierten Fotografiepunktsatz auf die zu vermessende und abzubildende Fläche Folgendes beinhaltet:
wenn bestimmt wird, dass ein kombinierter Fotofotografiebereich, der dem kombinierten Fotografiepunktsatz entspricht, den tatsächlichen Landnutzungsbereich der zu vermessenden und abzubildenden Fläche komplett bedeckt, Abbilden (Schritt 263) jedes Fotografiepunkts in dem kombinierten Fotografiepunktsatz auf die zu vermessende und abzubildende Fläche gemäß der vorgegebenen Beziehung relativer Positionen zwischen zwei Fotografiepunkten in dem kombinierten Fotografiepunktsatz, wobei der kombinierte Fotografiebereich ein Bereich ist, der durch Fotos zusammengesetzt wird, die an jedem Fotografiepunkt in dem kombinierten Fotografiepunktsatz gemacht wurden.

4. Verfahren gemäß Anspruch 2, wobei das Abbilden, gemäß Informationen der zu vermessenden und abzubildenden Fläche und der vorgegebenen Beziehung relativer Positionen zwischen zwei Fotografiepunkten in dem kombinierten Fotografiepunktsatz, jedes Fotografiepunkts in dem kombinierten Fotografiepunktsatz auf die zu vermessende und abzubildende Fläche Folgendes beinhaltet:

Beurteilen (Schritt 261), ob ein kombinierter Fotofotografiebereich, der dem kombinierten Fotografiepunktsatz entspricht, den tatsächlichen Landnutzungsbereich der zu vermessenden und abzubildenden Fläche komplett bedeckt, wobei der kombinierte Fotofotografiebereich ein Bereich ist, der durch Fotos zusammengesetzt ist, die an jedem Fotografiepunkt in dem kombinierten Fotografiepunktsatz gemacht wurden;
wenn bestimmt wird, dass der der kombinierte Fotofotografiebereich, der dem kombinierten Fotografiepunktsatz entspricht, scheitert, den tatsächlichen Landnutzungsbereich der zu vermessenden und abzubildenden Fläche komplett zu bedecken, Hinzufügen (Schritt 262) neuer Fotografiepunkte zu dem kombinierten Fotografiepunktsatz, um einen neuen kombinierten Fotografiepunktsatz gemäß einer Bedeckung des kombinierten Fotofotografiebereichs auf der zu vermessenden und abzubildenden Fläche zu bilden, und Fortsetzen des Ausführens des Beurteilens (Schritt 261), ob der kombinierte Fotofotografiebereich, der dem kombinierten Fotografiepunktsatz entspricht, den tatsächlichen Landnutzungsbereich der zu vermessenden und abzubildenden Fläche komplett bedeckt; und
wenn bestimmt wird, dass der kombinierte Fotofotografiebereich, der dem kombinierten Fotografiepunktsatz entspricht, den tatsächlichen Landnutzungsbereich der zu vermessenden und abzubildenden Fläche komplett bedeckt, Abbilden (Schritt 263) jedes Fotografiepunkts in dem kombinierten Fotografiepunktsatz auf die zu vermessende und abzubildende Fläche gemäß der vorgegebenen Beziehung relativer Positionen zwischen zwei Fotografiepunkten in dem kombinierten Fotografiepunktsatz.

5. Verfahren gemäß Anspruch 3, wobei das Bestimmen einer vorgegebenen Beziehung relativer Positionen zwischen zwei Fotografiepunkten in einem kombinierten Fotografiepunktsatz gemäß einem vorgegebenen Fotoüberlappungsgradindex und dem Einzelfotofotografiebereich Folgendes beinhaltet:

Bestimmen einer Größe eines Einzelfotos gemäß einer Einzelbildgröße der Fotografievorrichtung und einer Pixelbreite der Fotografievorrichtung, wobei die Größe des Einzelfotos gleich der Einzelbildgröße multipliziert mit der Pixelbreite ist;
Bilden eines zweidimensionalen Koordinatensystems und Auswählen eines Zielpunkts in dem zweidimensionalen Koordinatensystem als den zentralen Fotografiepunkt;
Erzeugen eines zentralen Fotos in dem zweidimensionalen Koordinatensystem gemäß dem zentralen Fotografiepunkt und der Größe des Einzelfotos;

Erzeugen von vier peripheren Fotos, die den vorgegebenen Fotoüberlappungsgradindex mit dem zentralen Foto befriedigen, in einer linken oberen Ecke, einer linken unteren Ecke, einer rechten oberen Ecke bzw. einer rechten unteren Ecke des zentralen Fotos;

Bestimmen, in dem zweidimensionalen Koordinatensystem, eines Koordinatenwerts eines peripheren Fotografiepunkts, der jedem peripheren Foto entspricht, gemäß einer Abbildungsbeziehung zwischen der Größe des Einzelfotos und dem Einzelfotofotografiebereich; und

Bestimmen der vorgegebenen Beziehung relativer Positionen zwischen zwei Fotografiepunkten in dem kombinierten Fotografiepunktsatz gemäß Koordinatenwerten des zentralen Fotografiepunkts und jedes peripheren Fotografiepunkts in dem zweidimensionalen Koordinatensystem.

6. Verfahren gemäß Anspruch 4, wobei das Beurteilen (Schritt 261), ob ein kombinierter Fotofotografiebereich, der dem kombinierten Fotografiepunktsatz entspricht, den tatsächlichen Landnutzungsbereich der zu vermessenden und abzubildenden Fläche komplett bedeckt, Folgendes beinhaltet:

wenn eine tatsächliche Landnutzungslänge des tatsächlichen Landnutzungsbereichs größer als eine kombinierte Fotografielänge des kombinierten Fotofotografiebereichs ist oder eine tatsächliche Landnutzungsbreite des tatsächlichen Landnutzungsbereichs größer als eine kombinierte Fotografiebreite des kombinierten Fotofotografiebereichs ist, Bestimmen, dass der kombinierte Fotofotografiebereich scheitert, den tatsächlichen Landnutzungsbereich der zu vermessenden und abzubildenden Fläche komplett zu bedecken.

7. Verfahren gemäß Anspruch 6, wobei das Hinzufügen neuer Fotografiepunkte zu dem kombinierten Fotografiepunktsatz, um einen neuen kombinierten Fotografiepunktsatz gemäß einer Bedeckung des kombinierten Fotofotografiebereichs auf der zu vermessenden und abzubildenden Fläche zu bilden, Folgendes beinhaltet:

wenn (Schritt 351a) die tatsächliche Landnutzungslänge des tatsächlichen Nutzungsbereichs kleiner als die oder gleich der kombinierten Fotografielänge des kombinierten Fotofotografiebereichs ist und die tatsächliche Landnutzungsbreite des tatsächlichen Nutzungsbereichs größer als die kombinierte Fotografiebreite des kombinierten Fotofotografiebereichs ist, Beurteilen, ob es Teilsätze in dem kombinierten Fotografiepunktsatz gibt;

wenn es Teilsätze in dem kombinierten Fotografiepunktsatz gibt, Auswählen (Schritt 352a) irgendeines der Teilsätze als ursprünglichen Teilsatz; wenn es keine Teilsätze in dem kombinierten Fotografiepunktsatz gibt, Bilden (Schritt 353a) eines ursprünglichen Teilsatzes gemäß einem gegenwärtigen Fotografiepunkt in dem kombinierten Fotografiepunktsatz; und

Erzeugen (Schritt 354a) eines Erstzielduplikatteilsatzes mit denselben Informationen relativer Positionen zwischen zwei Fotografiepunkten in dem ursprünglichen Teilsatz und Hinzufügen des Erstzielduplikatteilsatzes zu dem kombinierten Fotografiepunktsatz,

wobei sich jeder Fotografiepunkt in dem Erstzielduplikatteilsatz direkt über einem entsprechenden Fotografiepunkt in einem obersten Teilsatz in dem kombinierten Fotografiepunktsatz befindet oder sich jeder Fotografiepunkt in dem Erstzielduplikatteilsatz direkt unter einem entsprechenden Fotografiepunkt in einem untersten Teilsatz in dem kombinierten Fotografiepunktsatz befindet.

8. Verfahren gemäß Anspruch 6, wobei das Hinzufügen neuer Fotografiepunkte zu dem kombinierten Fotografiepunktsatz, um einen neuen kombinierten Fotografiepunktsatz gemäß einer Bedeckung des kombinierten Fotofotografiebereichs auf der zu vermessenden und abzubildenden Fläche zu bilden, Folgendes beinhaltet:

wenn (Schritt 351b) die tatsächliche Nutzungslänge des tatsächlichen Nutzungsbereichs größer als die kombinierte Fotografielänge des kombinierten Fotofotografiebereichs ist und die tatsächliche Nutzungsbreite des tatsächlichen Nutzungsbereichs kleiner als die oder gleich der kombinierten Fotografiebreite des kombinierten Fotofotografiebereichs ist, Beurteilen, ob es Teilsätze in dem kombinierten Fotografiepunktsatz gibt;

wenn es Teilsätze in dem kombinierten Fotografiepunktsatz gibt, Auswählen (Schritt 352b) irgendeines der Teilsätze als ursprünglichen Teilsatz; wenn es keine Teilsätze in dem kombinierten Fotografiepunktsatz gibt, Bilden (Schritt 353b) eines ursprünglichen Teilsatzes gemäß einem gegenwärtigen Fotografiepunkt in dem kombinierten Fotografiepunktsatz; und

Erzeugen (Schritt 354b) eines Zweitzielduplikatteilsatzes mit denselben Informationen relativer Positionen zwischen zwei Fotografiepunkten in dem ursprünglichen Teilsatz und Hinzufügen des Zweitzielduplikatteilsatzes zu dem kombinierten Fotografiepunktsatz,

wobei sich jeder Fotografiepunkt in dem Zweitzielduplikatteilsatz direkt zur Linken eines entsprechenden Fotografiepunkts in einem Teilsatz am weitesten links in dem kombinierten Fotografiepunktsatz befindet oder sich jeder Fotografiepunkt in dem Zweitzielduplikatteilsatz direkt zur Rechten eines entsprechenden Fotografiepunkts in einem Teilsatz am weitesten rechts in dem kombinierten Fotografiepunktsatz befindet.

9. Verfahren gemäß Anspruch 6, wobei das Hinzufügen neuer Fotografiepunkte zu dem kombinierten Fotografiepunktsatz, um einen neuen kombinierten Fotografiepunktsatz gemäß einer Bedeckung des kombinierten Fotofotografiebereichs auf der zu vermessenden und abzubildenden Fläche zu bilden, Folgendes beinhaltet:
wenn (Schritt 351c) die tatsächliche Landnutzungslänge des tatsächlichen Landnutzungsbereichs größer als die kombinierte Fotografielänge des kombinierten Fotofotografiebereichs ist und die tatsächliche Landnutzungsbreite des tatsächlichen Nutzungsbereichs größer als die kombinierte Fotografiebreite des kombinierten Fotofotografiebereichs ist, Hinzufügen mehrerer ergänzender peripherer Fotografiepunkte in einer Außenschicht zu dem kombinierten Fotografiepunktsatz, wobei die mehreren ergänzenden peripheren Fotografiepunkte in der Außenschicht Eckpunkte eines Rechtecks sind, das auf jeden peripheren Fotografiepunkt einer äußersten Schicht des kombinierten Fotografiepunktsatzes zentriert ist.

10. Verfahren gemäß einem der Ansprüche 7 bis 9, wobei das Bestimmen einer vorgegebenen Beziehung relativer Positionen zwischen zwei Fotografiepunkten in einem kombinierten Fotografiepunktsatz gemäß einem vorgegebenen Fotoüberlappungsgradindex und dem Einzelfotofotografiebereich Folgendes beinhaltet:

Bestimmen einer Größe eines Einzelfotos gemäß einer Einzelbildgröße der Fotografievorrichtung und einer Pixelbreite der Fotografievorrichtung, wobei die Größe des Einzelfotos gleich der Einzelbildgröße multipliziert mit der Pixelbreite ist;
wenn der kombinierte Fotografiepunktsatz mindestens zwei Teilsätze beinhaltet, Erhalten eines Teilsatzes an einem entferntesten Ende in einer Richtung als Zieloperationsteilsatz;
Erhalten eines zentralen Fotografiepunkts in dem Zieloperationsteilsatz;
Bilden eines zweidimensionalen Koordinatensystems und Auswählen eines Zielpunkts in dem zweidimensionalen Koordinatensystem als den zentralen Fotografiepunkt in dem Zieloperationsteilsatz;

Berechnen, von einer Innenschicht zu einer Außenschicht in dem Zieloperationsteilsatz, eines Koordinatenwerts von jedem peripheren Fotografiepunkt in dem zweidimensionalen Koordinatensystem gemäß dem zentralen Fotografiepunkt in dem Zieloperationsteilsatz, der Größe des Einzelfotos, einer Abbildungsbeziehung zwischen der Größe des Einzelfotos und dem Einzelfotofotografiebereich, eines ersten Fotoüberlappungsgradindex und der Anzahl von Schichten peripherer Fotografiepunkte, die dem Zieloperationsteilsatz entsprechen, wobei der erste Fotoüberlappungsgradindex eine Überlappung zwischen einem Foto, das an einem Außenschichtfotografiepunkt gemacht wurde, und einem Foto, das an einem entsprechenden Innenschichtfotografiepunkt gemacht wurde, ist;
Erhalten, innerhalb des kombinierten Fotografiepunktsatzes, eines Teilsatzes, dessen zentraler Fotografiepunkt die größte Nähe zu dem zentralen Fotografiepunkt in dem Zieloperationsteilsatz aufweist, als neuen Zieloperationsteilsatz;
Bestimmen, in dem zweidimensionalen Koordinatensystem, eines Koordinatenwerts jedes Fotografiepunkts in dem neuen Zieloperationsteilsatz gemäß einem zweiten Fotoüberlappungsgradindex und einem Koordinatenwert jedes Fotografiepunkts in einem vorherigen Zieloperationsteilsatz in dem zweidimensionalen Koordinatensystem, wobei der zweite Fotoüberlappungsgradindex eine Überlappung zwischen Fotos ist, die in dem vorherigen Zieloperationsteilsatz und dem neuen Zieloperationsteilsatz an zwei benachbarten Fotografiepunkten der äußersten Schicht gemacht wurden; und
Fortsetzen des Durchführens einer Operation des Erhaltens, innerhalb des kombinierten Fotografiepunktsatzes, eines Teilsatzes, dessen zentraler Fotografiepunkt die größte Nähe zu dem zentralen Fotografiepunkt in dem Zieloperationsteilsatz aufweist, als neuen Zieloperationsteilsatz, bis die Verarbeitung für alle Teilsätze in dem kombinierten Fotografiepunktsatz abgeschlossen wurde.

11. Verfahren gemäß Anspruch 4, wobei das Abbilden, gemäß Informationen der zu vermessenden und abzubildenden Fläche und der vorgegebenen Beziehung relativer Positionen zwischen zwei Fotografiepunkten in dem kombinierten Fotografiepunktsatz, jedes Fotografiepunkts in dem kombinierten Fotografiepunktsatz auf die zu vermessende und abzubildende Fläche Folgendes beinhaltet:

Erhalten (Schritt 370) eines Schlüssellokalisierungsfotografiepunkts von jedem Fotografiepunkt in dem kombinierten Fotografiepunktsatz, wobei der Schlüssellokalisierungsfotografiepunkt einen Ecklokalisierungspunkt oder einen zentralen Lokalisierungspunkt beinhaltet; und nachdem (Schritt 380) der Schlüssellokalisierungsfotografiepunkt auf einer entsprechenden Position in der zu vermessenden und abzubildenden Fläche abgebildet wurde, Abbilden anderer Fotografiepunkte in dem kombinierten Fotografiepunktsatz auf der zu vermessenden und abzubildenden Fläche gemäß einer Beziehung relativer Positionen zwischen den anderen Fotografiepunkten in dem kombinierten Fotografiepunktsatz und dem Schlüssellokalisierungsfotografiepunkt.

12. Verfahren gemäß Anspruch 1, wobei vor dem Erhalten eines Fotografieparameters einer Fotografievorrichtung, die von einem unbemannten Luftfahrzeug zum Vermessen und Abbilden getragen wird, das Verfahren ferner Folgendes beinhaltet:
Berechnen der festgelegten Flughöhe gemäß einer Pixelbreite der Fotografievorrichtung, einer Linsenfokaldistanz der Fotografievorrichtung und einer Bodenpixelauflösung.

13. Verfahren gemäß Anspruch 1, wobei nach dem Abbilden, gemäß Informationen der zu vermessenden und abzubildenden Fläche und der vorgegebenen Beziehung relativer Positionen zwischen zwei Fotografiepunkten in dem kombinierten Fotografiepunktsatz, jedes Fotografiepunkts in dem kombinierten Fotografiepunktsatz auf die zu vermessende und abzubildende Fläche das Verfahren ferner Folgendes beinhaltet:

Senden (Schritt 270) jedes der Abtastpunkte zum Vermessen und Abbilden zu dem unbemannten Luftfahrzeug zum Vermessen und Abbilden, sodass eine Vermessungs- und Abbildungsfotosammlung, die der zu vermessenden und abzubildenden Fläche entspricht, von dem unbemannten Luftfahrzeug zum Vermessen und Abbilden gemacht wird, wenn das unbemannte Luftfahrzeug zum Vermessen und Abbilden gemäß der festgelegten Flughöhe zu jedem der Abtastpunkte zum Vermessen und Abbilden fliegt; und
Vorbereiten jedes Fotos in der Vermessungs- und Abbildungsfotosammlung, um zu einem Vermessungs- und Abbildungsbild zusammengesetzt zu werden, das mit der zu vermessenden und abzubildenden Fläche übereinstimmt.

14. Eine Vorrichtung zur Planung von Abtastpunkten zum Vermessen und Abbilden, die Folgendes beinhaltet:

ein Fotografieparametererhaltungsmodul (410), das konfiguriert ist, um einen Fotografieparameter einer Fotografievorrichtung, die von einem unbemannten Luftfahrzeug zum Vermessen und Abbilden getragen wird, zu erhalten, wobei der Fotografieparameter einen Einzelfotofotografiebereich des unbemannten Luftfahrzeugs zum Vermessen und Abbilden in einer festgelegten Flughöhe beinhaltet, wobei der Einzelfotofotografiebereich gleich einer Bodenpixelauflösung multipliziert mit einer Einzelbildgröße ist;
ein Modul (420) zum Bestimmen einer vorgegebenen Beziehung relativer Positionen, das konfiguriert ist, um eine Beziehung relativer Positionen zwischen zwei Fotografiepunkten in einem kombinierten Fotografiepunktsatz gemäß einem vorgegebenen Fotoüberlappungsgradindex und dem Einzelfotofotografiebereich zu bestimmen, wobei jeder Fotografiepunkt dem Einzelfotofotografiebereich entspricht, wobei der kombinierte Fotografiepunktsatz einen zentralen Fotografiepunkt und vier periphere Fotografiepunkte beinhaltet, wobei der zentrale Fotografiepunkt ein Mittelpunkt eines Rechtecks ist, wobei die vier peripheren Fotografiepunkte vier Eckpunkte des Rechtecks sind, sodass ein Foto des kompletten Rechtecks erhalten wird, wenn Fotos, die an allen Fotografiepunkten gemacht wurden, kombiniert werden und ein Überlappungsgrad zwischen einem Foto, das an dem zentralen Fotografiepunkt gemacht wurde, und einem Foto, das an jedem peripheren Fotografiepunkt gemacht wurde, größer ist als der zwischen zwei Fotos, die jeweils an zwei peripheren Fotografiepunkten gemacht wurden; wobei der vorgegebene Fotoüberlappungsgradindex ein Prozentsatz von Überlappung zwischen dem Foto, das an dem zentralen Fotografiepunkt gemacht wurde, und dem Foto, das an jedem peripheren Fotografiepunkt gemacht wurde, ist; und
ein Fotografiepunktabbildungsmodul (430), das konfiguriert ist, um gemäß Informationen der zu vermessenden und abzubildenden Fläche und der vorgegebenen Beziehung relativer Positionen zwischen zwei Fotografiepunkten in dem kombinierten Fotografiepunktsatz jeden Fotografiepunkt in dem kombinierten Fotografiepunktsatz auf die zu vermessende und abzubildende Fläche abzubilden, um als ein Abtastpunkt zum Vermessen und Abbilden zu dienen, der durch das unbemannte Luftfahrzeug zum Vermessen und Abbilden in der festgelegten Flughöhe in der zu vermessenden und abzubildenden Fläche vermessen wurde, wobei die Informationen der zu vermessenden und abzubildenden Fläche eine Bereichsform oder eine Bereichsgröße der zu vermessenden und abzubildenden Fläche beinhalten, wobei jeder Abtastpunkt ein Positionspunkt in der zu vermessenden und abzubildenden Fläche ist, an dem das unbemannte Luftfahrzeug das Vermessen und Abbilden durchführt.

**Revendications**

1. Un procédé destiné à la planification de points échantillons pour un arpentage et une cartographie comprenant :

l'obtention (Étape 110) d'un paramètre de prise de cliché d'un dispositif de prise de cliché porté par un véhicule aérien sans pilote pour un arpentage et une cartographie, le paramètre de prise de cliché comprenant une zone de prise de cliché par cliché unique du véhicule aérien sans pilote pour un arpentage et une cartographie à une altitude de vol réglée, où la zone de prise de cliché par cliché unique est égale à une résolution en pixels au sol multipliée par une taille d'image ;
la détermination (Étape 120) d'une relation de position relative préréglée entre les points de chaque paire de points de prise de cliché dans un ensemble de points de prise de cliché combinés selon un indice de degré de chevauchement de clichés préréglé et la zone de prise de cliché par cliché unique, chaque point de prise de cliché correspondant à la zone de prise de cliché par cliché unique, où l'ensemble de points de prise de cliché combinés comprend un point de prise de cliché central et quatre points de prise de cliché périphériques, le point de prise de cliché central est un centre d'un rectangle, les quatre points de prise de cliché périphériques sont quatre sommets du rectangle, de telle sorte qu'un cliché de rectangle complet est obtenu lorsque des clichés pris au niveau de tous les points de prise de cliché sont combinés, et un degré de chevauchement entre un cliché pris au niveau du point de prise de cliché central et un cliché pris au niveau de chaque point de prise de cliché périphérique est plus grand que celui entre deux clichés pris respectivement au niveau de chaque point d'une paire de points de prise de cliché périphériques ; l'indice de degré de chevauchement de clichés préréglé est un pourcentage de chevauchement entre le cliché pris au niveau du point de prise de cliché central et le cliché pris au niveau de chaque point de prise de cliché périphérique ; et
la cartographie (Étape 130), selon des informations ayant trait à la parcelle devant être arpentée et cartographiée et la relation de position relative préréglée entre les points de chaque paire de points de prise de cliché dans l'ensemble de points de prise de cliché combinés, de chaque point de prise de cliché dans l'ensemble de points de prise de cliché combinés sur la parcelle devant être arpentée et cartographiée, afin de servir comme point échantillon pour un arpentage et une cartographie arpenté par le véhicule aérien sans pilote pour un arpentage et une cartographie au niveau de l'altitude de vol réglée dans la parcelle devant être arpentée et cartographiée, où les informations ayant trait à la parcelle devant être arpentée et cartographiée comprennent une forme de zone ou une taille de zone de la parcelle devant être arpentée et cartographiée, chaque point échantillon est un point de position, dans la parcelle devant être arpentée et cartographiée, au niveau duquel le véhicule aérien sans pilote réalise un arpentage et une cartographie.

2. Le procédé selon la revendication 1, où avant une cartographie, selon des informations ayant trait à la parcelle devant être arpentée et cartographiée et la relation de position relative préréglée entre les points de chaque paire de points de prise de cliché dans l'ensemble de points de prise de cliché combinés, de chaque point de prise de cliché dans l'ensemble de points de prise de cliché combinés sur la parcelle devant être arpentée et cartographiée, le procédé comprend en outre :

s'il est déterminé que la parcelle devant être arpentée et cartographiée est d'un rectangle selon les informations ayant trait à la parcelle devant être arpentée et cartographiée, la détermination (Étape 230, 330) d'une zone d'occupation de terrain de la parcelle devant être arpentée et cartographiée comme zone d'occupation de terrain réelle de la parcelle devant être arpentée et cartographiée ; et
s'il est déterminé que la parcelle devant être arpentée et cartographiée est d'un non rectangle selon les informations ayant trait à la parcelle devant être arpentée et cartographiée, la détermination (Étape 240, 340) d'une zone d'occupation de terrain correspondant à un rectangle extérieur minimum de la parcelle devant être arpentée et cartographiée comme zone d'occupation de terrain réelle de la parcelle devant être arpentée et cartographiée.

3. Le procédé selon la revendication 2, où la cartographie, selon des informations ayant trait à la parcelle devant être arpentée et cartographiée et la relation de position relative préréglée entre les points de chaque paire de points de prise de cliché dans l'ensemble de points de prise de cliché combinés, de chaque point de prise de cliché dans l'ensemble de points de prise de cliché combinés sur la parcelle devant être arpentée et cartographiée, comprend :

s'il est déterminé qu'une zone de prise de cliché par clichés combinés correspondant à l'ensemble de points de prise de cliché combinés couvre complètement la zone d'occupation de terrain réelle de la parcelle devant être arpentée et cartographiée, la cartographie (Étape 263) de chaque point de prise de cliché dans l'ensemble de points de prise de cliché combinés sur la parcelle devant être arpentée et cartographiée selon la relation de position relative préréglée entre les points de chaque paire de points de prise de cliché dans l'ensemble de points de prise de cliché combinés, où la zone de prise de cliché combinée est une zone synthétisée par des clichés pris au niveau de chaque point de prise de cliché dans l'ensemble de points de prise de cliché combinés.

4. Le procédé selon la revendication 2, où la cartographie, selon des informations ayant trait à la parcelle devant être arpentée et cartographiée et la relation de position relative préréglée entre les points de chaque paire de points de prise de cliché dans l'ensemble de points de prise de cliché combinés, de chaque point de prise de cliché dans l'ensemble de points de prise de cliché combinés sur la parcelle devant être arpentée et cartographiée, comprend :

le jugement (Étape 261) quant à savoir si une zone de prise de cliché par clichés combinés correspondant à l'ensemble de points de prise de cliché combinés couvre complètement la zone d'occupation de terrain réelle de la parcelle devant être arpentée et cartographiée, où la zone de prise de cliché par clichés combinés est une zone synthétisée par des clichés pris au niveau de chaque point de prise de cliché dans l'ensemble de points de prise de cliché combinés ;
s'il est déterminé que la zone de prise de cliché par clichés combinés correspondant à l'ensemble de points de prise de cliché combinés ne parvient pas à couvrir complètement la zone d'occupation de terrain réelle de la parcelle devant être arpentée et cartographiée, l'ajout (Étape 262) de nouveaux points de prise de cliché à l'ensemble de points de prise de cliché combinés afin de construire un nouvel ensemble de points de prise de cliché combinés selon une couverture de la zone de prise de cliché par clichés combinés de la parcelle devant être arpentée et cartographiée, et le retour à l'exécution du jugement (Étape 261) quant à savoir si la zone de prise de cliché par clichés combinés correspondant à l'ensemble de points de prise de cliché combinés couvre complètement la zone d'occupation de terrain réelle de la parcelle devant être arpentée et cartographiée ; et
s'il est déterminé que la zone de prise de cliché par clichés combinés correspondant à l'ensemble de points de prise de cliché combinés couvre complètement la zone d'occupation de terrain réelle de la parcelle devant être arpentée et cartographiée, la cartographie (Étape 263) de chaque point de prise de cliché dans l'ensemble de points de prise de cliché combinés sur la parcelle devant être arpentée et cartographiée selon la relation de position relative préréglée entre les points de chaque paire de points de prise de cliché dans l'ensemble de points de prise de cliché combinés.

5. Le procédé selon la revendication 3, où la détermination d'une relation de position relative préréglée entre les points de chaque paire de points dans un ensemble de points de prise de cliché combinés selon un indice de degré de chevauchement de clichés préréglé et la zone de prise de cliché par cliché unique, comprend :

la détermination d'une taille d'un cliché unique selon une taille d'image du dispositif de prise de cliché et une largeur en pixels du dispositif de prise de cliché, où la taille du cliché unique est égale à la taille d'image multipliée par la largeur en pixels ;
la construction d'un système de coordonnées bidimensionnel, et la sélection d'un point cible dans le système de coordonnées bidimensionnel comme point de prise de cliché central ;
la génération d'un cliché central dans le système de coordonnées bidimensionnel selon le point de prise de cliché central et la taille du cliché unique ;
la génération de quatre clichés périphériques qui satisfont à l'indice de degré de chevauchement de clichés préréglé avec le cliché central au niveau d'un coin supérieur gauche, d'un coin inférieur gauche, d'un coin supérieur droit, et d'un coin inférieur droit du cliché central, respectivement ;
la détermination, dans le système de coordonnées bidimensionnel, d'une valeur de coordonnée d'un point de prise de cliché périphérique correspondant à chaque cliché périphérique selon une relation de cartographie entre la taille du cliché unique et la zone de prise de cliché par cliché unique ; et
la détermination de la relation de position relative préréglée entre les points de chaque paire de points dans l'ensemble de points de prise de cliché combinés selon des valeurs de coordonnées du point de prise de cliché central et de chaque point de prise de cliché périphérique dans le système de coordonnées bidimensionnel.

6.  Le procédé selon la revendication 4, où le jugement (Étape 261) quant à savoir si une zone de prise de cliché par clichés combinés correspondant à l'ensemble de points de prise de cliché combinés couvre complètement la zone d'occupation de terrain réelle de la parcelle devant être arpentée et cartographiée, comprend :
    si une longueur d'occupation de terrain réelle de la zone d'occupation de terrain réelle est plus grande qu'une longueur de prise de cliché combinée de la zone de prise de cliché par clichés combinés, ou une largeur d'occupation de terrain réelle de la zone d'occupation de terrain réelle est plus grande qu'une largeur de prise de cliché combinée de la zone de prise de cliché par clichés combinés, la détermination du fait que la zone de prise de cliché par clichés combinés ne parvient pas à couvrir complètement la zone d'occupation de terrain réelle de la parcelle devant être arpentée et cartographiée.

7.  Le procédé selon la revendication 6, où l'ajout de nouveaux points de prise de cliché à l'ensemble de points de prise de cliché combinés afin de construire un nouvel ensemble de points de prise de cliché combinés selon une couverture de la zone de prise de cliché par clichés combinés de la parcelle devant être arpentée et cartographiée, comprend :

    si (Étape 351a) la longueur d'occupation de terrain réelle de la zone d'occupation réelle est plus petite que ou égale à la longueur de prise de cliché combinée de la zone de prise de cliché par clichés combinés, et la largeur d'occupation de terrain réelle de la zone d'occupation réelle est plus grande que la largeur de prise de cliché combinée de la zone de prise de cliché par clichés combinés, le jugement quant à savoir s'il y a des sous-ensembles dans l'ensemble de points de prise de cliché combinés ;
    s'il y a des sous-ensembles dans l'ensemble de points de prise de cliché combinés, la sélection (Étape 352a) de n'importe lequel des sous-ensembles comme sous-ensemble original ; s'il n'y a pas de sous-ensembles dans l'ensemble de points de prise de cliché combinés, la construction (Étape 353a) d'un sous-ensemble original selon un point de prise de cliché actuel dans l'ensemble de points de prise de cliché combinés ; et
    la génération (Étape 354a) d'un premier sous-ensemble dupliqué cible avec les mêmes informations de position relative entre les points de chaque paire de points de prise de cliché dans le sous-ensemble original, et l'ajout du premier sous-ensemble dupliqué cible à l'ensemble de points de prise de cliché combinés,
    où chaque point de prise de cliché dans le premier sous-ensemble dupliqué cible est situé directement au-dessus d'un point de prise de cliché correspondant dans un sous-ensemble plus supérieur dans l'ensemble de points de prise de cliché combinés, ou chaque point de prise de cliché dans le premier sous-ensemble dupliqué cible est situé directement au-dessous d'un point de prise de cliché correspondant dans un sous-ensemble plus inférieur dans l'ensemble de points de prise de cliché combinés.

8.  Le procédé selon la revendication 6, où l'ajout de nouveaux points de prise de cliché à l'ensemble de points de prise de cliché combinés afin de construire un nouvel ensemble de points de prise de cliché combinés selon une couverture de la zone de prise de cliché par clichés combinés de la parcelle devant être arpentée et cartographiée, comprend :

    si (Étape 351b) la longueur d'occupation réelle de la zone d'occupation réelle est plus grande que la longueur de prise de cliché combinée de la zone de prise de cliché par clichés combinés, et la largeur d'occupation réelle de la zone d'occupation réelle est plus petite que ou égale à la largeur de prise de cliché combinée de la zone de prise de cliché par clichés combinés, le jugement quant à savoir s'il y a des sous-ensembles dans l'ensemble de points de prise de cliché combinés ;
    s'il y a des sous-ensembles dans l'ensemble de points de prise de cliché combinés, la sélection (Étape 352b) de n'importe lequel des sous-ensembles comme sous-ensemble original ; s'il n'y a pas de sous-ensembles dans l'ensemble de points de prise de cliché combinés, la construction (Étape 353b) d'un sous-ensemble original selon un point de prise de cliché actuel dans l'ensemble de points de prise de cliché combinés ; et
    la génération (Étape 354b) d'un deuxième sous-ensemble dupliqué cible avec les mêmes informations de position relative entre les points de chaque paire de points de prise de cliché dans le sous-ensemble original, et l'ajout du deuxième sous-ensemble dupliqué cible à l'ensemble de points de prise de cliché combinés,
    où chaque point de prise de cliché dans le deuxième sous-ensemble dupliqué cible est situé directement à gauche d'un point de prise de cliché correspondant dans un sous-ensemble plus à gauche dans l'ensemble de points de prise de cliché combinés, ou chaque point de prise de cliché dans le deuxième sous-ensemble dupliqué cible est situé directement à droite d'un point de prise de cliché correspondant dans un sous-ensemble plus à droite dans l'ensemble de points de prise de cliché combinés.

9. Le procédé selon la revendication 6, où l'ajout de nouveaux points de prise de cliché à l'ensemble de points de prise de cliché combinés afin de construire un nouvel ensemble de points de prise de cliché combinés selon une couverture de la zone de prise de cliché par clichés combinés de la parcelle devant être arpentée et cartographiée, comprend :

si (Étape 351c) la longueur d'occupation de terrain réelle de la zone d'occupation de terrain réelle est plus grande que la longueur de prise de cliché combinée de la zone de prise de cliché par clichés combinés, et la largeur d'occupation de terrain réelle de la zone d'occupation réelle est plus grande que la largeur de prise de cliché combinée de la zone de prise de cliché par clichés combinés, l'ajout de multiples points de prise de cliché périphériques de couche extérieure supplémentaires à l'ensemble de points de prise de cliché combinés,

où les multiples points de prise de cliché périphériques de couche extérieure supplémentaires sont des sommets d'un rectangle centré sur chaque point de prise de cliché périphérique d'une couche plus extérieure de l'ensemble de points de prise de cliché combinés.

10. Le procédé selon n'importe laquelle des revendications 7 à 9, où la détermination d'une relation de position relative préréglée entre les points de chaque paire de points de prise de cliché dans un ensemble de points de prise de cliché combinés selon un indice de degré de chevauchement de clichés préréglé et la zone de prise de cliché par cliché unique, comprend :

la détermination d'une taille d'un cliché unique selon une taille d'image du dispositif de prise de cliché et une largeur en pixels du dispositif de prise de cliché, où la taille du cliché unique est égale à la taille d'image multipliée par la largeur en pixels ;

si l'ensemble de points de prise de cliché combinés comprend au moins deux sous-ensembles, l'obtention d'un sous-ensemble au niveau d'une extrémité plus éloignée dans une direction comme sous-ensemble d'opération cible ;

l'obtention d'un point de prise de cliché central dans le sous-ensemble d'opération cible ;

la construction d'un système de coordonnées bidimensionnel, et la sélection d'un point cible dans le système de coordonnées bidimensionnel comme point de prise de cliché central dans le sous-ensemble d'opération cible ;

le calcul, à partir d'une couche intérieure jusqu'à une couche extérieure dans le sous-ensemble d'opération cible, d'une valeur de coordonnée de chaque point de prise de cliché périphérique dans le système de coordonnées bidimensionnel selon le point de prise de cliché central dans le sous-ensemble d'opération cible, la taille du cliché unique, une relation de cartographie entre la taille du cliché unique et la zone de prise de cliché par cliché unique, un premier indice de degré de chevauchement de clichés, et le nombre de couches de points de prise de cliché périphériques correspondant au sous-ensemble d'opération cible, le premier indice de degré de chevauchement de clichés étant un chevauchement entre un cliché pris au niveau d'un point de prise de cliché de couche extérieure et un cliché pris au niveau d'un point de prise de cliché de couche intérieure correspondant ;

l'obtention, au sein de l'ensemble de points de prise de cliché combinés, d'un sous-ensemble dont le point de prise de cliché central est plus proche du point de prise de cliché central dans le sous-ensemble d'opération cible comme nouveau sous-ensemble d'opération cible ;

la détermination, dans le système de coordonnées bidimensionnel, d'une valeur de coordonnée de chaque point de prise de cliché dans le nouveau sous-ensemble d'opération cible selon un deuxième indice de degré de chevauchement de clichés et une valeur de coordonnée de chaque point de prise de cliché dans un précédent sous-ensemble d'opération cible dans le système de coordonnées bidimensionnel, le deuxième indice de degré de chevauchement de clichés étant un chevauchement entre des clichés pris au niveau de deux points de prise de cliché de couche plus extérieure adjacents dans le précédent sous-ensemble d'opération cible et le nouveau sous-ensemble d'opération cible ; et

le retour à la réalisation d'une opération d'obtention, au sein de l'ensemble de points de prise de cliché combinés, d'un sous-ensemble dont le point de prise de cliché central est plus proche du point de prise de cliché central dans le sous-ensemble d'opération cible comme nouveau sous-ensemble d'opération cible, jusqu'à ce que le traitement de tous les sous-ensembles dans l'ensemble de points de prise de cliché combinés soit achevé.

11. Le procédé selon la revendication 4, où la cartographie, selon des informations ayant trait à la parcelle devant être arpentée et cartographiée et la relation de position relative préréglée entre les points de chaque paire de points de prise de cliché dans l'ensemble de points de prise de cliché combinés, de chaque point de prise de cliché dans l'ensemble de points de prise de cliché combinés sur la parcelle devant être arpentée et cartographiée, comprend :

l'obtention (Étape 370) d'un point de prise de cliché de situation clé auprès de chaque point de prise de cliché dans l'ensemble de points de prise de cliché combinés, le point de prise de cliché de situation clé comprenant un point de situation de coin ou un point de situation central ; et

après (Étape 380) que le point de prise de cliché de situation clé a été cartographie sur une position correspondante dans la parcelle devant être arpentée et cartographiée, la cartographie d'autres points de prise de cliché dans l'ensemble de points de prise de cliché combinés sur la parcelle devant être arpentée et cartographiée selon une relation de position relative entre les autres points de prise de cliché dans l'ensemble de points de prise de cliché combinés et le point de prise de cliché de situation clé.

12. Le procédé selon la revendication 1, où avant l'obtention d'un paramètre de prise de cliché d'un dispositif de prise de cliché porté par un véhicule aérien sans pilote pour un arpentage et une cartographie, le procédé comprend en outre :
le calcul de l'altitude de vol réglée selon une largeur en pixels du dispositif de prise de cliché, une longueur focale de lentille du dispositif de prise de cliché, et une résolution en pixels au sol.

13. Le procédé selon la revendication 1, où après la cartographie, selon des informations ayant trait à la parcelle devant être arpentée et cartographiée et la relation de position relative préréglée entre les points de chaque paire de points de prise de cliché dans l'ensemble de points de prise de cliché combinés, de chaque point de prise de cliché dans l'ensemble de points de prise de cliché combinés sur la parcelle devant être arpentée et cartographiée, le procédé comprend en outre :

l'envoi (Étape 270) de chacun des points échantillons pour un arpentage et une cartographie au véhicule aérien sans pilote pour un arpentage et une cartographie, de sorte qu'une collection de clichés d'arpentage et de cartographie correspondant à la parcelle devant être arpentée et cartographiée soit prise par le véhicule aérien sans pilote pour un arpentage et une cartographie lorsque le véhicule aérien sans pilote pour un arpentage et une cartographie vole jusqu'à chacun des points échantillons pour un arpentage et une cartographie selon l'altitude de vol réglée ; et
le réglage de chaque cliché dans la collection de clichés d'arpentage et de cartographie afin qu'il soit synthétisé en une image d'arpentage et de cartographie qui concorde avec la parcelle devant être arpentée et cartographiée.

14. Un dispositif destiné à la planification de points échantillons pour un arpentage et une cartographie comprenant :

un module d'obtention de paramètres de prise de cliché (410), configuré pour obtenir un paramètre de prise de cliché d'un dispositif de prise de cliché porté par un véhicule aérien sans pilote pour un arpentage et une cartographie, le paramètre de prise de cliché comprenant une zone de prise de cliché par cliché unique du véhicule aérien sans pilote pour un arpentage et une cartographie au niveau d'une altitude de vol réglée, où la zone de prise de cliché par cliché unique est égale à une résolution en pixels au sol multipliée par une taille d'image ;
un module de détermination de relation de position relative préréglée (420), configuré pour déterminer une relation de position relative entre les points de chaque paire de points de prise de cliché dans un ensemble de points de prise de cliché combinés selon un indice de degré de chevauchement de clichés préréglé et la zone de prise de cliché par cliché unique, chaque point de prise de cliché correspondant à la zone de prise de cliché par cliché unique, où l'ensemble de points de prise de cliché combinés comprend un point de prise de cliché central et quatre points de prise de cliché périphériques, le point de prise de cliché central est un centre d'un rectangle, les quatre points de prise de cliché périphériques sont quatre sommets du rectangle, de telle sorte qu'un cliché de rectangle complet soit obtenu lorsque des clichés pris au niveau de tous les points de prise de cliché sont combinés, et un degré de chevauchement entre un cliché pris au niveau du point de prise de cliché central et un cliché pris au niveau de chaque point de prise de cliché périphérique est plus grand que celui entre deux clichés pris respectivement au niveau des points de chaque paire de points de prise de cliché périphériques ; l'indice de degré de chevauchement de clichés préréglé est un pourcentage de chevauchement entre le cliché pris au niveau du point de prise de cliché central et le cliché pris au niveau de chaque point de prise de cliché périphérique ; et
un module de cartographie de points de prise de cliché (430), configuré pour cartographier, selon des informations ayant trait à la parcelle devant être arpentée et cartographiée et la relation de position relative préréglée entre les points de chaque paire de points de prise de cliché dans l'ensemble de points de prise de cliché combinés, chaque point de prise de cliché dans l'ensemble de points de prise de cliché combinés sur la parcelle devant être arpentée et cartographiée, afin de servir comme point échantillon pour un arpentage et une cartographie arpenté par le véhicule aérien sans pilote pour un arpentage et une cartographie au niveau de l'altitude de vol réglée dans la parcelle devant être arpentée et cartographiée, où les informations ayant trait à la parcelle devant être arpentée et cartographiée comprennent une forme de zone ou une taille de zone de la parcelle devant être arpentée et cartographiée, chaque point échantillon est un point de position, dans la parcelle devant être arpentée et cartographiée, au niveau duquel le véhicule aérien sans pilote réalise un arpentage et une cartographie.

EP 3 875 901 B1

Obtaining a photographing parameter of a photographing device
carried by an unmanned aerial vehicle for surveying and
mapping, the photographing parameter including a single-photo
photographing area of the unmanned aerial vehicle for
surveying and mapping at a set flight altitude

Step 110

Determining a preset relative position relationship between each
two photographing points in a combined photographing point
set according to a preset photo overlap degree index and the
single-photo photographing area, each photographing point
corresponding to one single-photo photographing area

Step 120

Mapping, according to surveying and mapping plot information
and the preset relative position relationship between each two
photographing points in the combined photographing point set,
each photographing point in the combined photographing point
set to the plot to be surveyed and mapped, to serve as the
sample points for surveying and mapping surveyed by the
unmanned aerial vehicle for surveying and mapping at the set
flight altitude in the plot to be surveyed and mapped

Step 130

FIG. 1a

FIG. 1b

34

```
┌─────────────────────────────────────────────────────────┐
│ Obtaining a photographing parameter of a photographing   │
│ device carried by an unmanned aerial vehicle for         │        Step 210
│ surveying and mapping, the photographing parameter       │
│ including a single-photo photographing area of the       │
│ unmanned aerial vehicle for surveying and mapping at a   │
│ set flight altitude                                       │
└─────────────────────────────────────────────────────────┘
                            │
                            ▼
No          ◇────────────────────────────────────◇
        ◇    Judging whether the plot to be          ◇       Step 220
   ◇  surveyed and mapped is of a rectangle according to the ◇
        ◇    information of the plot to be surveyed     ◇
              ◇     and mapped                    ◇
                            │ Yes
                            ▼
┌─────────────────────────────────────────────────────────┐
│ Determining that the plot to be surveyed and mapped is   │
│ of a rectangle, and determining a land occupation area   │        Step 230
│ of the plot to be surveyed and mapped as an actual land  │
│ occupation area of the plot to be surveyed and mapped    │
└─────────────────────────────────────────────────────────┘
                            │
                            ▼
┌─────────────────────────────────────────────────────────┐
│ Determining that the plot to be surveyed and mapped is   │
│ of non-rectangular, and determining a land occupation    │
│ area corresponding to a minimum outer rectangle of the   │        Step 240
│ plot to be surveyed and mapped as the actual land        │
│ occupation area of the plot to be surveyed and mapped    │
└─────────────────────────────────────────────────────────┘
                            │
                            ▼
┌─────────────────────────────────────────────────────────┐
│ Determining a preset relative position relationship      │
│ between each two photographing points in a combined      │
│ photographing point set according to a preset photo      │        Step 250
│ overlap degree index and the single-photo photographing  │
│ area, each photographing point corresponding to one      │
│ single-photo photographing area                          │
└─────────────────────────────────────────────────────────┘
```

Judging whether the plot to be surveyed and mapped is of a rectangle according to the information of the plot to be surveyed and mapped — Step 220

```
┌ ─ ─ ─ ─ ─ ─ ─ ─ ─ ─ ─ ─ ─ ─ ─ ─ ─ ─ ─ ─ ─ ─ ─ ─ ─ ─ ─ ┐
│                         ▼                               │
│          ◇────────────────────────────────◇            │
│ Yes  ◇    Whether a combined photo             ◇          Step 261
│   ◇  photographing area corresponding to the     ◇      │
│      ◇ combined photographing point set completely ◇    │
│      ◇  covers an actual land occupation area of ◇      │
│           ◇ the plot to be surveyed and    ◇           │
│                ◇    mapped            ◇                 │
│                         │ No                            │
│                         ▼                               │
│ ┌─────────────────────────────────────────────────┐    │
│ │ Adding new photographing points to the combined  │    │
│ │ photographing point set to construct a new       │    │
│ │ combined photographing point set according to a  │      Step 262
│ │ coverage of the combined photo photographing     │    │
│ │ area on the plot to be surveyed and mapped       │    │
│ └─────────────────────────────────────────────────┘    │
│                         │                               │
│                         ▼                               │
│ ┌─────────────────────────────────────────────────┐    │
│ │ Mapping, according to the preset relative        │    │
│ │ position relationship between each two           │    │
│ │ photographing points in the combined             │      Step 263
│ │ photographing point set, each photographing      │    │
│ │ point in the combined photographing point set    │    │
│ │ to the plot to be surveyed and mapped            │    │
│ └─────────────────────────────────────────────────┘    │
└ ─ ─ ─ ─ ─ ─ ─ ─ ─ ─ ─ ─ ─ ─ ─ ─ ─ ─ ─ ─ ─ ─ ─ ─ ─ ─ ─ ┘
```

Step 260

```
                            ▼
┌─────────────────────────────────────────────────────────┐
│ Sending each of the sample points for surveying and      │
│ mapping to the unmanned aerial vehicle for surveying     │
│ and mapping, so that a surveying and mapping photo        │
│ collection corresponding to the plot to be surveyed and   │
│ mapped is taken by the unmanned aerial vehicle for        │      Step 270
│ surveying and mapping when the unmanned aerial vehicle    │
│ for surveying and mapping flies to each of the sample     │
│ points for surveying and mapping according to the set     │
│ flight altitude                                           │
└─────────────────────────────────────────────────────────┘
```

FIG. 2

Obtaining a photographing parameter of a photographing device carried by an unmanned aerial vehicle for surveying and mapping, the photographing parameter including a single-photo photographing area of the unmanned aerial vehicle for surveying and mapping at a set flight altitude — Step 310

No

Judging whether the plot to be surveyed and mapped is of a rectangle according to the information of the plot to be surveyed and mapped — Step 320

Yes

Determining that the plot to be surveyed and mapped is of a rectangle, determining a land occupation area of the plot to be surveyed and mapped as an actual land occupation area of the plot to be surveyed and mapped — Step 330

Determining a land occupation area corresponding to a minimum outer rectangle of the plot to be surveyed and mapped as the actual land occupation area of the plot to be surveyed and mapped — Step 340

No

When it is determined that an actual land occupation length of the actual occupation area is less than or equal to a combined photographing length of the combined photo photographing area, and an actual land occupation width of the actual occupation area is greater than the combined photographing width of the combined photo photographing area, judging whether there are subsets in the combined photographing point set — Step 351a

Yes

Selecting any one of the subsets as an original subset — Step 352a

Constructing an original subset according to a current photographing point in the combined photographing point set — Step 353a

Generating a first target duplicate subset with the same relative position information between each two photographing points in the original subset, and adding the first target duplicate subset to the combined photographing point set — Step 354a

After it is determined that a combined photo photographing area corresponding to the combined photographing point set can completely cover an actual land occupation area of the plot to be surveyed and mapped, determining a preset relative position relationship between each two photographing points in a combined photographing point set according to a preset photo overlap degree index and the single-photo photographing area, each photographing point corresponding to one single-photo photographing area — Step 360

Obtaining a key locating photographing point from each photographing point in the combined photographing point set, the key locating photographing point including a corner locating point or a central locating point — Step 370

After the key locating photographing point is mapped to a corresponding position in the plot to be surveyed and mapped, mapping other photographing points in the combined photographing point set to the plot to be surveyed and mapped according to a preset relative position relationship between the other photographing points in the combined photographing point set and the key locating photographing point — Step 380

FIG. 3a

Obtaining a photographing parameter of a photographing device carried by an unmanned aerial vehicle for surveying and mapping, the photographing parameter including a single-photo photographing area of the unmanned aerial vehicle for surveying and mapping at a set flight altitude — Step 310

Judging whether the plot to be surveyed and mapped is of a rectangle according to the information of the plot to be surveyed and mapped — Step 320

No

Yes

Determining that the plot to be surveyed and mapped is of a rectangle, determining a land occupation area of the plot to be surveyed and mapped as an actual land occupation area of the plot to be surveyed and mapped — Step 330

Determining a land occupation area corresponding to a minimum outer rectangle of the plot to be surveyed and mapped as the actual land occupation area of the plot to be surveyed and mapped — Step 340

When it is determined that the actual land occupation length of the actual land occupation area is greater than the combined photographing length of the combined photo photographing area, and the actual land occupation width of the actual land occupation area is less than or equal to the combined photographing width of the combined photo photographing area, judging whether there are subsets in the combined photographing point set — Step 351b

No

Yes

Selecting any one of the subsets as an original subset — Step 352b

Constructing an original subset according to a current photographing point in the combined photographing point set — Step 353b

Generating a second target duplicate subset with the same relative position information between each two photographing points in the original subset, and adding the second target duplicate subset to the combined photographing point set — Step 354b

After it is determined that a combined photo photographing area corresponding to the combined photographing point set can completely cover an actual land occupation area of the plot to be surveyed and mapped, determining a preset relative position relationship between each two photographing points in a combined photographing point set according to a preset photo overlap degree index and the single-photo photographing area, each photographing point corresponding to one single-photo photographing area — Step 360

Obtaining a key locating photographing point from each photographing point in the combined photographing point set, the key locating photographing point including a corner locating point or a central locating point — Step 370

After the key locating photographing point is mapped to a corresponding location in the plot to be surveyed and mapped, mapping other photographing points in the combined photographing point set to the plot to be surveyed and mapped according to a preset relative position relationship between the other photographing points in the combined photographing point set and the key locacting photographing point — Step 380

FIG. 3b

Obtaining a photographing parameter of a photographing device carried by an unmanned aerial vehicle for surveying and mapping, the photographing parameter including a single-photo photographing area of the unmanned aerial vehicle for surveying and mapping at a set flight altitude — Step 310

No

Judging whether the plot to be surveyed and mapped is a rectangle according to the information of the plot to be surveyed and mapped — Step 320

Yes

Determining that the plot to be surveyed and mapped is of a rectangle, determining a land occupation area of the plot to be surveyed and mapped as an actual land occupation area of the plot to be surveyed and mapped — Step 330

Determining a land occupation area corresponding to a minimum outer rectangle of the plot to be surveyed and mapped as the actual land occupation area of the plot to be surveyed and mapped — Step 340

When it is determined that the actual land occupation length of the actual land occupation area is greater than the combined photographing length of the combined photo photographing area, and the actual land occupation width of the actual occupation area is greater than the combined photographing width of the combined photo photographing area, adding multiple supplementary outer layer peripheral photographing points to the combined photographing point set — Step 351c

After it is determined that the combined photo photographing area corresponding to the combined photographing point set can completely cover the actual land occupation area of the plot to be surveyed and mapped, determining the preset relative position relationship between each two photographing points in the combined photographing point set according to the preset photo overlap degree index and the single-photo photographing area, each photographing point corresponding to one single-photo photographing area — Step 360

Obtaining a key locating photographing point from each photographing point in the combined photographing point set, the key locating photographing point including a corner locating point or a central locating point — Step 370

After the key locating photographing point is mapped to a corresponding location in the plot to be surveyed and mapped, mapping other photographing points in the combined photographing point set to the plot to be surveyed and mapped according to a preset relative position relationship between the other photographing points in the combined photographing point set and the key locating photographing point — Step 380

FIG. 3c

FIG. 3d

FIG. 3e

FIG. 3f

Photographing parameter obtaining module ～410

Relative position relationship determining module ～420

Photographing point mapping module ～430

FIG. 4

512 ～ Control Terminal

528

530 Storage Device 534

RAM

516

Storage System

Processor

Cache Memory

536

526

532

518

522

520

524

Display

I/O Interface

Network Adapter

514

External Device

FIG. 5

**EP 3 875 901 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017221241 A1